# EUROPEAN PATENT APPLICATION

(11) **EP 4 804 674 A1**
(43) Date of publication of application: **09.09.2026**
(21) Application number: 24886420.9
(22) Date of filing: 30.10.2024
(51) Int. Cl.: H04W 72/0446, H04W 72/21, H04L 5/14, H04W 72/232, H04W 72/1268, H04L 5/00

(54) **OPERATION METHOD OF DEVICE IN WIRELESS COMMUNICATION SYSTEM, AND DEVICE USING SAME METHOD**

(30) Priority: 01.11.2023 KR 20230149201
(71) Applicant: LG Electronics Inc., Yeongdeungpo-gu Seoul 07336 (KR)
(72) Inventor: YOU, Hyangsun, Seoul 06772 (KR); YANG, Suckchel, Seoul 06772 (KR); KIM, Seonwook, Seoul 06772 (KR); KO, Hyunsoo, Seoul 06772 (KR)
(74) Representative: Plasseraud IP
(86) International application number: PCT/KR2024/096419
(87) International publication number: WO 2025/095750

(57) **Abstract**

Provided are an operation method of a device in a wireless communication system, and a device using the method. The method comprises: receiving downlink data from a network in a first slot; determining a second slot in which hybrid automatic repeat request-acknowledgement (HARQ-ACK) information for the downlink data is to be transmitted to the network; and when the second slot is a full duplex (FD) slot composed of FD resources, transmitting the HARQ-ACK information in a third slot which is a half duplex (HD) slot composed of HD resources located after the FD slot.

## Description

### TECHNICAL FIELD

This disclosure relates to a method of operating a device in a wireless communication system and a device using the method.

### BACKGROUND ART

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new radio access technology (new RAT or NR) in the present disclosure for convenience.

In NR or post-NR wireless communication systems, full duplex (FD) operation can be performed. When performing FD operation, the device can perform reception and transmission simultaneously in a specific time resource. Half duplex (HD) operation differs in that only one of reception and transmission can be performed in a given time resource.

For FD operation, i) some frequency resources in the same time resource can be allocated as downlink subbands and other some frequency resources as uplink subbands (this may be referred to as subband FD, or SBFD (subband-wise full duplex)), or ii) frequency resources that can be used for both downlink reception and uplink transmission in the same time resource can be allocated (this may be referred to as spectrum shared FD, or SSFD (spectrum-sharing full duplex)).

On the other hand, in the case of time/frequency resources configured for a device to operate in FD and/or support FD (which may be referred to as FD resources), a channel environment may be poorer than that of time/frequency resources configured to operate in HD (which may be referred to as HD resources) due to cross-link interference (CLI), self-interference (SI), and the like.

Accordingly, when important control information, for example, uplink control information (UCI), is transmitted through the FD resources, a receiver may fail to successfully receive the UCI due to a poor channel condition.

In consideration of the above, there is a need for a method and a device for determining a time resource for transmitting UCI in a communication system supporting FD operation.

### DISCLOSURE

### TECHNICAL PROBLEM

The technical problem to be solved by the present disclosure is to provide a method of operating a device in a wireless communication system and a device using the method.

### TECHNICAL SOLUTION

A method of operating a device in a wireless communication system and a device using the method are provided. According to the method, The UE receives downlink data from a network in a first slot, and the UE determines a second slot for transmitting hybrid automatic repeat request-acknowledgement (HARQ-ACK) information for the downlink data to the network. In this case, when the second slot is an FD slot composed of full duplex (FD) resources, the UE transmits the HARQ-ACK information in a third slot which is an HD slot composed of half duplex (HD) resources and located after the FD slot.

In another aspect, a UE, apparatus, and computer-readable medium for executing the above method is provided.

In another aspect, a method of operating a base station and a base station using the method are provided. According to the method of operating the base station, A base station transmits downlink data to a UE in a first slot, and determines a second slot in which HARQ-ACK information for the downlink data is to be received from the UE. In this case, when the second slot is an FD slot composed of FD resources, the base station receives the HARQ-ACK information in a third slot which is an HD slot composed of HD resources and located after the FD slot.

### ADVANTAGEOUS EFFECTS

In a wireless communication system including a UE supporting both FD operation and HD operation, it is possible to prevent UCI from being transmitted through FD resources in which a channel state may be poorer than a channel state targeted by a base station. Accordingly, even in a wireless communication system supporting FD operation, UCI can be reliably transmitted.

In addition, when resources of different types, i.e., FD resources and HD resources, coexist, it is possible to clearly define through which resource UCI is transmitted, thereby preventing ambiguity from occurring between transmitting and receiving entities.

### BRIEF DESCRIPTION OF THE DRAWINGS

FIG. 1 illustrates a wireless communication system to which the present disclosure can be applied.
FIG. 2 is a block diagram showing the radio protocol architecture for the user plane.
FIG. 3 is a block diagram showing the radio protocol structure for the control plane.
FIG. 4 illustrates the system structure of a next-generation radio access network (NG-RAN) to which NR is applied.
FIG. 5 illustrates the functional division between NG-RAN and 5GC.
FIG. 6 illustrates a frame structure that can be applied in NR.
FIG. 7 illustrates the slot structure of an NR frame.
FIG. 8 illustrates the CORESET.
FIG. 9 shows an example of a frame structure for a new wireless access technology.
FIG. 10 illustrates the structure of a self-contained slot.
FIG. 11 illustrates physical channels and typical signal transmission.
FIG. 12 is an example of PUSCH repetition type A.
FIG. 13 is an example of PUSCH repetition type B.
FIG. 14 shows examples of how to apply full duplex (FD) within an intra-carrier.
FIG. 15 shows an example in which a time resource operating in half duplex (HD) and a time resource operating in full duplex (FD) such as SBFD or SSFD exist together.
FIG. 16 shows an example of a first time resource, a second time resource, a first frequency resource and a second frequency resource.
FIG. 17 shows another example of a first time resource, a second time resource, a first frequency resource, and a second frequency resource.
FIG. 18 illustrates a method for transmitting HARQ-ACK information of a UE.
FIG. 19 illustrates an example of a delayed UCI transmission method.
FIG. 20 illustrates an operation method of a UE in a wireless communication system.
FIG. 21 illustrates the signaling process and operation between a base station and a UE.
FIG. 22 illustrates a wireless device that can be applied the present specification.
FIG. 23 shows an example of a signal processing module structure.
FIG. 24 shows another example of the structure of a signal processing module in a transmission device.
FIG. 25 shows an example of a wireless communication device according to an implementation example of the present disclosure.
FIG. 26 shows another example of a wireless device.
FIG. 27 illustrates the communication system 1 applied to this specification.

### MODE FOR INVENTION

In the present specification, "A or B" may mean "only A", "only B" or "both A and B". In other words, in the present specification, "A or B" may be interpreted as "A and/or B". For example, in the present specification, "A, B, or C" may mean "only A", "only B", "only C", or "any combination of A, B, C".

A slash (/) or comma used in the present specification may mean "and/or". For example, "A/B" may mean "A and/or B". Accordingly, "A/B" may mean "only A", "only B", or "both A and B". For example, "A, B, C" may mean "A, B, or C".

In the present specification, "at least one of A and B" may mean "only A", "only B", or "both A and B". In addition, in the present specification, the expression "at least one of A or B" or "at least one of A and/or B" may be interpreted as "at least one of A and B".

In addition, in the present specification, "at least one of A, B, and C" may mean "only A", "only B", "only C", or "any combination of A, B, and C". In addition, "at least one of A, B, or C" or "at least one of A, B, and/or C" may mean "at least one of A, B, and C".

In addition, a parenthesis used in the present specification may mean "for example". Specifically, when indicated as "control information (PDCCH)", it may mean that "PDCCH" is proposed as an example of the "control information". In other words, the "control information" of the present specification is not limited to "PDCCH", and "PDCCH" may be proposed as an example of the "control information". In addition, when indicated as "control information (i.e., PDCCH)", it may also mean that "PDCCH" is proposed as an example of the "control information".

Technical features described individually in one figure in the present specification may be individually implemented, or may be simultaneously implemented.

The drawings hereinafter have been prepared to describe specific examples of the present specification. Since specific names of devices or specific names of signals/messages/fields described in the drawings are illustratively presented, technical features of the present specification are not limited to the specific names used in the drawings below.

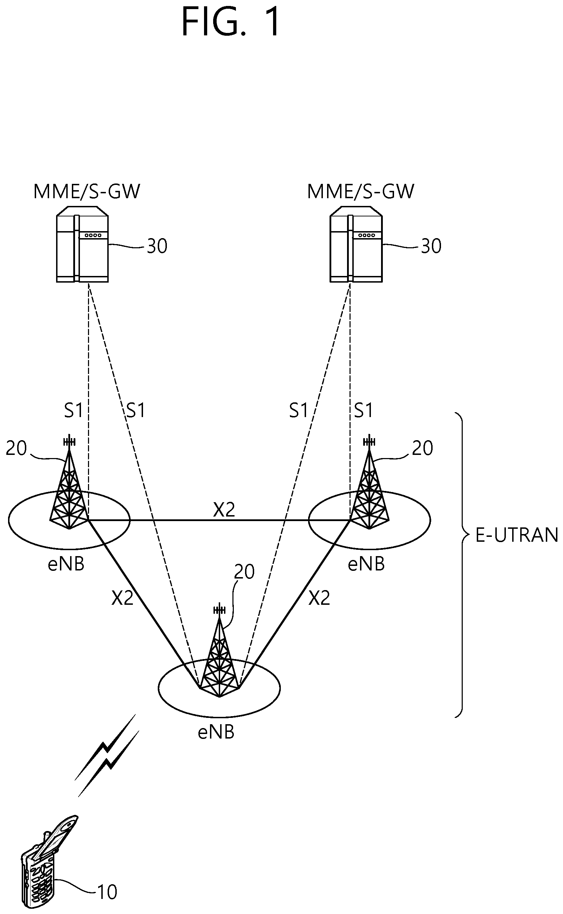

FIG. 1 illustrates a wireless communication system to which the present disclosure can be applied. This may also be called E-UTRAN (Evolved-UMTS Terrestrial Radio Access Network), or LTE (Long Term Evolution)/LTE-A system.

The E-UTRAN includes a base station (BS) 20 which provides a control plane and a user plane to a user equipment (UE) 10. The UE 10 may be fixed or mobile, and may be referred to as another terminology, such as a mobile station (MS), a user terminal (UT), a subscriber station (SS), a mobile terminal (MT), a wireless device, terminal etc. The BS 20 is generally a fixed station that communicates with the UE 10 and may be referred to as another terminology, such as an evolved node-B (eNB), a base transceiver system (BTS), an access point, etc.

The BSs are interconnected by means of an X2 interface. The BSs are also connected by means of an S1 interface to an evolved packet core (EPC) 30, more specifically, to a mobility management entity (MME) through S1-MME and to a serving gateway (S-GW) through S1-U.

The EPC 30 includes an MME, an S-GW, and a packet data network-gateway (P-GW). The MME has access information of the UE or capability information of the UE, and such information is generally used for mobility management of the UE. The S-GW is a gateway having an E-UTRAN as an end point. The P-GW is a gateway having a PDN as an end point.

Layers of a radio interface protocol between the UE and the network can be classified into a first layer (L1), a second layer (L2), and a third layer (L3) based on the lower three layers of the open system interconnection (OSI) model that is well-known in the communication system. Among them, a physical (PHY) layer belonging to the first layer provides an information transfer service by using a physical channel, and a radio resource control (RRC) layer belonging to the third layer serves to control a radio resource between the UE and the network. For this, the RRC layer exchanges an RRC message between the UE and the BS.

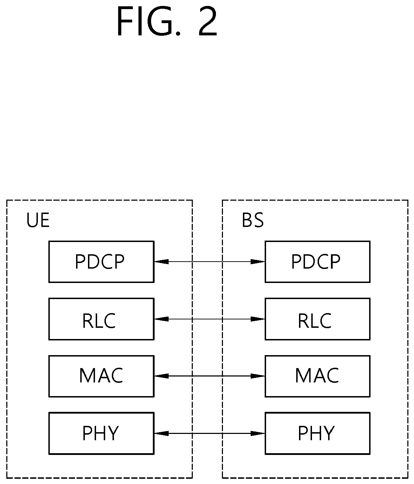

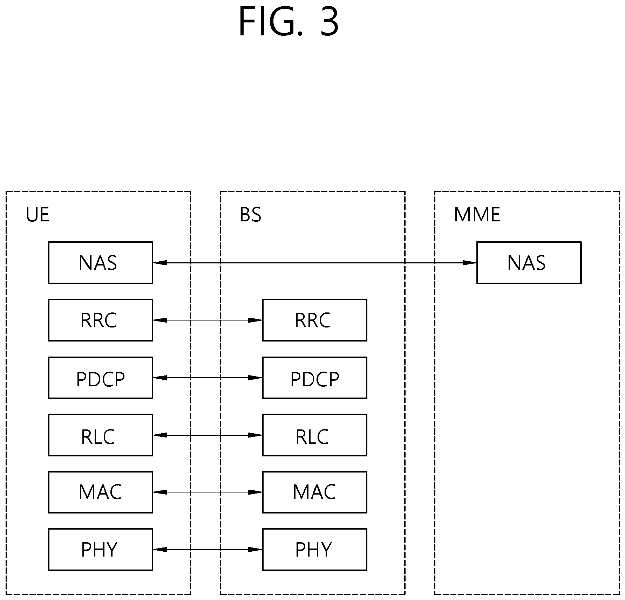

FIG. 2 is a block diagram showing the radio protocol architecture for the user plane. FIG. 3 is a block diagram showing the radio protocol structure for the control plane. The user plane is a protocol stack for user data transmission. The control plane is a protocol stack for control signal transmission.

Referring to FIG. 2 and FIG. 3, a PHY layer provides an upper layer (=higher layer) with an information transfer service through a physical channel. The PHY layer is connected to a medium access control (MAC) layer which is a higher layer of the PHY layer through a transport channel. Data is transferred between the MAC layer and the PHY layer through the transport channel. The transport channel is classified according to how and with what characteristics data is transferred through a radio interface.

Data is moved between different PHY layers, that is, the PHY layers of a transmitter and a receiver, through a physical channel. The physical channel may be modulated according to an Orthogonal Frequency Division Multiplexing (OFDM) scheme, and use the time and frequency as radio resources.

The functions of the MAC layer include mapping between a logical channel and a transport channel and multiplexing and demultiplexing to a transport block that is provided through a physical channel on the transport channel of a MAC Service Data Unit (SDU) that belongs to a logical channel. The MAC layer provides service to a Radio Link Control (RLC) layer through the logical channel.

The functions of the RLC layer include the concatenation, segmentation, and reassembly of an RLC SDU. In order to guarantee various types of Quality of Service (QoS) required by a Radio Bearer (RB), the RLC layer provides three types of operation mode: Transparent Mode (TM), Unacknowledged Mode (UM), and Acknowledged Mode (AM). AM RLC provides error correction through an Automatic Repeat Request (ARQ).

The RRC layer is defined only on the control plane. The RRC layer is related to the configuration, reconfiguration, and release of radio bearers, and is responsible for control of logical channels, transport channels, and PHY channels. An RB means a logical route that is provided by the first layer (PHY layer) and the second layers (MAC layer, the RLC layer, and the PDCP layer) in order to transfer data between UE and a network.

The function of a Packet Data Convergence Protocol (PDCP) layer on the user plane includes the transfer of user data and header compression and ciphering. The function of the PDCP layer on the user plane further includes the transfer and encryption/integrity protection of control plane data.

What an RB is configured means a process of defining the characteristics of a wireless protocol layer and channels in order to provide specific service and configuring each detailed parameter and operating method. An RB can be divided into two types of a Signaling RB (SRB) and a Data RB (DRB). The SRB is used as a passage through which an RRC message is transmitted on the control plane, and the DRB is used as a passage through which user data is transmitted on the user plane.

If RRC connection is established between the RRC layer of UE and the RRC layer of an E-UTRAN, the UE is in the RRC connected state. If not, the UE is in the RRC idle state.

A downlink transport channel through which data is transmitted from a network to UE includes a broadcast channel (BCH) through which system information is transmitted and a downlink shared channel (SCH) through which user traffic or control messages are transmitted. Traffic or a control message for downlink multicast or broadcast service may be transmitted through the downlink SCH, or may be transmitted through an additional downlink multicast channel (MCH). Meanwhile, an uplink transport channel through which data is transmitted from UE to a network includes a random access channel (RACH) through which an initial control message is transmitted and an uplink shared channel (SCH) through which user traffic or control messages are transmitted.

Logical channels that are placed over the transport channel and that are mapped to the transport channel include a broadcast control channel (BCCH), a paging control channel (PCCH), a common control channel (CCCH), a multicast control channel (MCCH), and a multicast traffic channel (MTCH).

The physical channel includes several OFDM symbols in the time domain and several subcarriers in the frequency domain. One subframe includes a plurality of OFDM symbols in the time domain. An RB is a resources allocation unit, and includes a plurality of OFDM symbols and a plurality of subcarriers. Furthermore, each subframe may use specific subcarriers of specific OFDM symbols (e.g., the first OFDM symbol) of the corresponding subframe for a physical downlink control channel (PDCCH), that is, an L1/L2 control channel. A Transmission Time Interval (TTI) is a unit time for subframe transmission.

Hereinafter, a new radio access technology (new RAT, NR) will be described.

As more and more communication devices require more communication capacity, there is a need for improved mobile broadband communication over existing radio access technology. Also, massive machine type communications (MTC), which provides various services by connecting many devices and objects, is one of the major issues to be considered in the next generation communication. In addition, communication system design considering reliability/latency sensitive service/UE is being discussed. The introduction of next generation radio access technology considering enhanced mobile broadband communication (eMBB), massive MTC (mMTC), ultra-reliable and low latency communication (URLLC) is discussed. This new technology may be called new RAT or NR in the present disclosure for convenience.

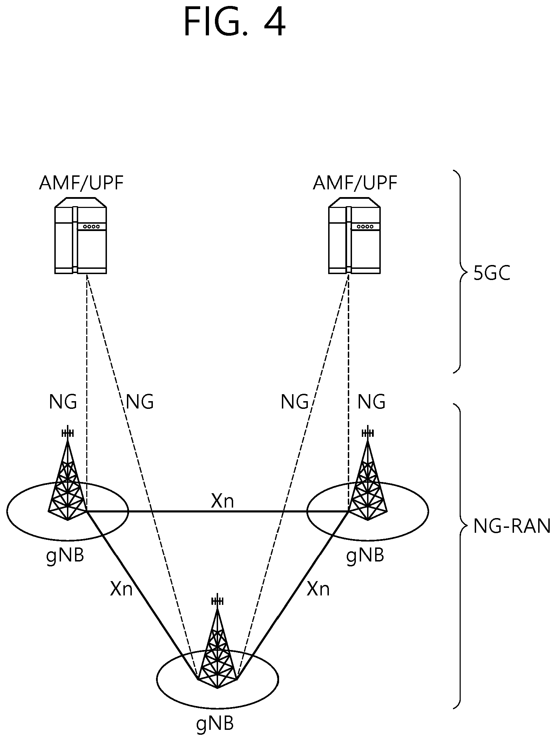

FIG. 4 illustrates a system structure of a next generation radio access network (NG-RAN) to which NR is applied.

Referring to FIG. 4, the NG-RAN may include a gNB and/or an eNB that provides user plane and control plane protocol termination to a UE. FIG. 4 illustrates the case of including only gNBs. The gNBs(eNBs) are connected by an Xn interface. The gNB and the eNB are connected to a 5G core network (5GC) via an NG interface. More specifically, the gNB and the eNB are connected to an access and mobility management function (AMF) via an NG-C interface and connected to a user plane function (UPF) via an NG-U interface.

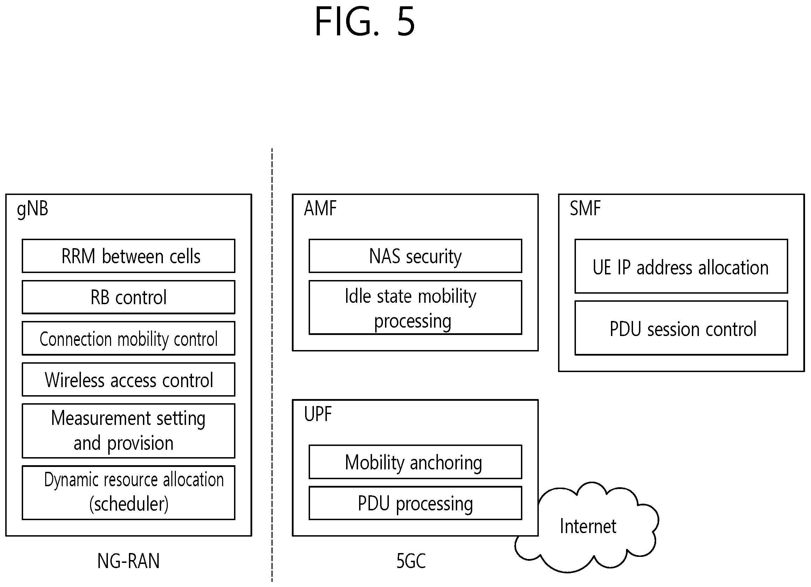

FIG. 5 illustrates a functional division between an NG-RAN and a 5GC.

Referring to FIG. 5, the gNB may provide functions such as an inter-cell radio resource management (Inter Cell RRM), radio bearer management (RB control), connection mobility control, radio admission control, measurement configuration & provision, dynamic resource allocation, and the like. The AMF may provide functions such as NAS security, idle state mobility handling, and so on. The UPF may provide functions such as mobility anchoring, PDU processing, and the like. The SMF may provide functions such as UE IP address assignment, PDU session control, and so on.

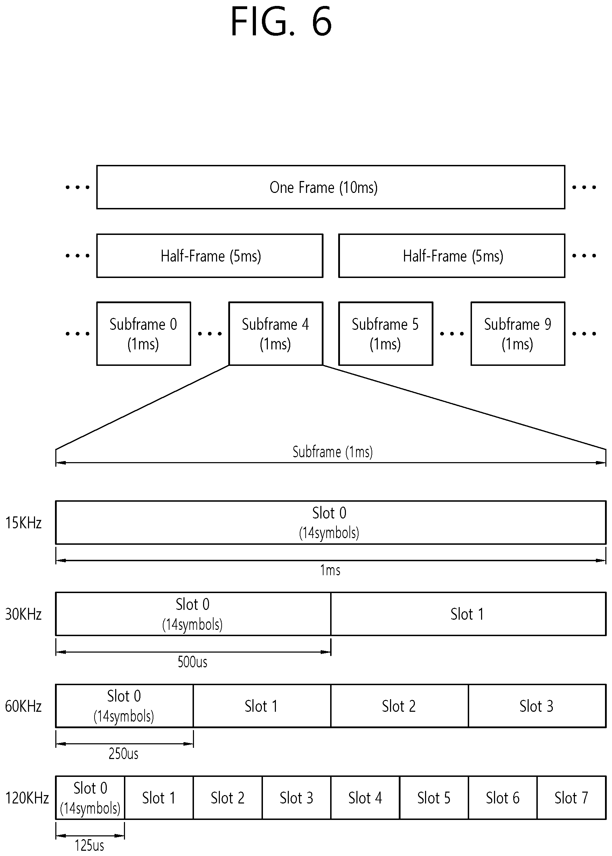

FIG. 6 illustrates an example of a frame structure that may be applied in NR.

Referring to FIG. 6, in the NR, a radio frame (hereinafter, also referred to as a frame) may be used in uplink and downlink transmissions. The frame has a length of 10ms, and may be defined as two 5ms half-frames (HFs). The HF may be defined as five 1ms subframes (SFs). The SF may be divided into one or more slots, and the number of slots within the SF depends on a subcarrier spacing (SCS). Each slot includes 12 or 14 OFDM(A) symbols according to a cyclic prefix (CP). In case of using a normal CP, each slot includes 14 symbols. In case of using an extended CP, each slot includes 12 symbols. Herein, a symbol may include an OFDM symbol (or CP-OFDM symbol) and a Single Carrier-FDMA (SC-FDMA) symbol (or Discrete Fourier Transform-spread-OFDM (DFT-s-OFDM) symbol).

The following table 1 illustrates a subcarrier spacing configuration µ.

**[Table 1]**

| µ | Δf = 2^{µ}·15[kHz] | Cyclic prefix (CP) |
|---|---|---|
| 0 | 15 | Normal |
| 1 | 30 | Normal |
| 2 | 60 | Normal |
| | | Extended |
| 3 | 120 | Normal |
| 4 | 240 | Normal |
| 5 | 480 | Normal |
| 6 | 960 | Normal |

The following table 2 illustrates the number of slots in a frame (N^{frame'µ}ₛₗₒₜ), the number of slots in a subframe (N^{subframe,µ}ₛₗₒₜ), the number of symbols in a slot (N^{slot}_{symb}), and the like, according to subcarrier spacing configurations µ.

**[Table 2]**

| µ | N^{slot}_{symb} | N^{frame,µ}ₛₗₒₜ | N^{subframe,µ}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |
| 6 | 14 | 640 | 64 |

FIG. 6 illustrates a case of µ=0, 1, 2, 3.

Table 2-1 below illustrates that the number of symbols per slot, the number of slots per frame, and the number of slots per subframe vary depending on the SCS, in case of using an extended CP.

**[Table 2-1]**

| µ | N^{slot}_{symb} | N^{frame, µ} ₛₗₒₜ | N^{subframe, µ} ₛₗₒₜ |
|---|---|---|---|
| 2 | 12 | 40 | 4 |

In an NR system, OFDM(A) numerologies (e.g., SCS, CP length, and so on) may be differently configured between a plurality of cells integrated to one UE. Accordingly, an (absolute time) duration of a time resource (e.g., SF, slot or TTI) (for convenience, collectively referred to as a time unit (TU)) configured of the same number of symbols may be differently configured between the integrated cells.

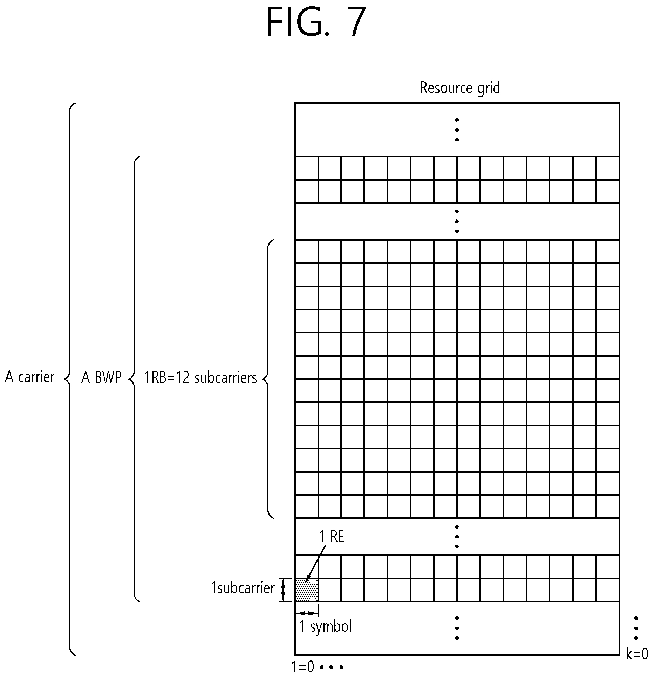

FIG. 7 illustrates a slot structure.

A slot may include a plurality of symbols in a time domain. For example, in case of a normal CP, one slot may include 14 symbols (or 7 symbols). However, in case of an extended CP, one slot may include 12 symbols (or 6 symbols). A carrier may include a plurality of subcarriers in a frequency domain. A resource block (RB) may be defined as a plurality of consecutive subcarriers (e.g., 12 subcarriers) in the frequency domain. A bandwidth part (BWP) may be defined as a plurality of consecutive (physical) resource blocks ((P)RBs) in the frequency domain, and the BWP may correspond to one numerology (e.g., SCS, CP length, and so on). The carrier may include up to N (e.g., 5) BWPs. Data communication may be performed via an active BWP, and only one BWP may be activated for one UE. In a resource grid, each element may be referred to as a resource element (RE), and one complex symbol may be mapped thereto.

A physical downlink control channel (PDCCH) may include one or more control channel elements (CCEs) as illustrated in the following table 3.

**[Table 3]**

| **Aggregation level** | **Number of CCEs** |
|---|---|
| 1 | 1 |
| 2 | 2 |
| 4 | 4 |
| 8 | 8 |
| 16 | 16 |

That is, the PDCCH may be transmitted through a resource including 1, 2, 4, 8, or 16 CCEs. Here, the CCE includes six resource element groups (REGs), and one REG includes one resource block in a frequency domain and one orthogonal frequency division multiplexing (OFDM) symbol in a time domain.

Monitoring implies decoding of each PDCCH candidate according to a downlink control information (DCI) format. The UE monitors a set of PDCCH candidates in one or more CORESETs (to be described below) on an active DL BWP of each activated serving cell in which PDCCH monitoring is configured, according to a corresponding search space set.

A new unit called a control resource set (CORESET) may be introduced in the NR. The UE may receive a PDCCH in the CORESET.

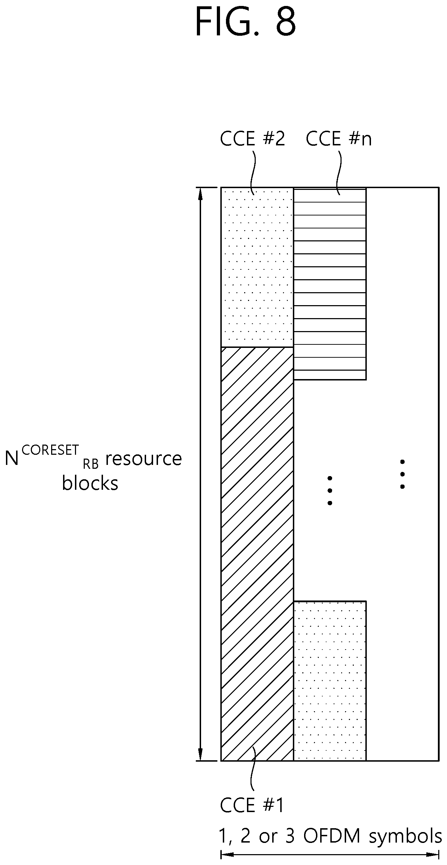

FIG. 8 illustrates CORESET.

Referring to FIG. 8, the CORESET includes N^{CORESET}_{RB} number of resource blocks in the frequency domain, and N^{CORESET}_{symb} ∈ {1, 2, 3} number of symbols in the time domain. N^{CORESET}_{RB} and N^{CORESET}_{symb} may be provided by a base station via higher layer signaling. As illustrated in FIG. 8, a plurality of CCEs (or REGs) may be included in the CORESET.

The UE may attempt to detect a PDCCH in units of 1, 2, 4, 8, or 16 CCEs in the CORESET. One or a plurality of CCEs in which PDCCH detection may be attempted may be referred to as PDCCH candidates.

A plurality of CORESETs may be configured for the UE.

A control region in the related art wireless communication system (e.g., LTE/LTE-A) is configured over the entire system BW used by a base station (BS). All the UEs, excluding some (e.g., eMTC/NB-IoT UE) supporting only a narrow band, shall be able to receive wireless signals of the entire system BW of the BS in order to properly receive/decode control information transmitted by the BS.

On the other hand, in NR, CORESET described above was introduced. CORESET is radio resources for control information to be received by the UE and may use only a portion, rather than the entirety of the system bandwidth. The BS may allocate the CORESET to each UE and may transmit control information through the allocated CORESET. In the NR, the UE may receive control information from the BS, without necessarily receiving the entire system BW.

The CORESET may include a UE-specific CORESET for transmitting UE-specific control information and a common CORESET for transmitting control information common to all UEs.

On the other hand, NR may require high reliability depending on the application field. In this situation, the target block error rate (BLER) for downlink control information (DCI) transmitted through a downlink control channel (e.g., physical downlink control channel: PDCCH) may be significantly lower than that of the prior art. As an example of a method to satisfy the requirement for such high reliability, the amount of content included in DCI can be reduced and/or the amount of resources used when transmitting DCI can be increased. At this time, the resources may include at least one of resources in the time domain, resources in the frequency domain, resources in the code domain, and resources in the spatial domain.

In NR, the following technologies/features can be applied.

### <Self-contained subframe structure>

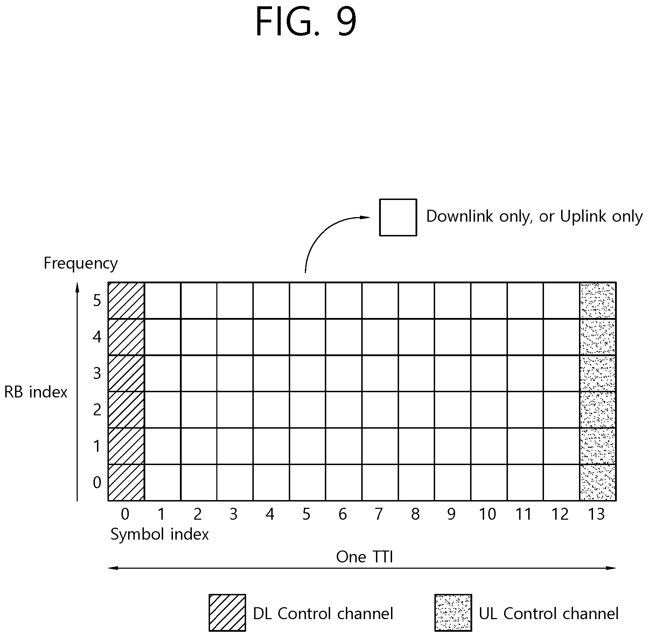

FIG. 9 shows an example of a frame structure for a new wireless access technology.

In NR, as shown in FIG. 9, a structure in which a control channel and a data channel are time-division-multiplexed within one TTI can be considered as a frame structure in order to minimize latency.

FIG. 9 illustrates an example in which a downlink control area is located in a front portion of a TTI, and an uplink control area is located in a rear portion of the TTI. An area between the downlink control area and the uplink control area may be used for transmission of downlink data (DL data) or may be used for transmission of uplink data (UL data). A feature of this structure is that downlink (DL) reception and uplink (UL) transmission are sequentially performed within one subframe/slot, such that DL data may be received and an UL ACK/NACK (Acknowledgement/Not-acknowledgement) may be transmitted within one subframe/slot. As a result, a time taken until data retransmission in a case where a data transmission error occurs is reduced, and thus latency of final data delivery may be minimized.

As described above, in a data and control TDMed subframe structure, a time gap for a base station and a UE to switch from a transmission mode to a reception mode or from the reception mode to the transmission mode may be required. To this end, some OFDM symbols at a time when DL switches to UL may be set to a guard period (GP) in the self-contained subframe structure.

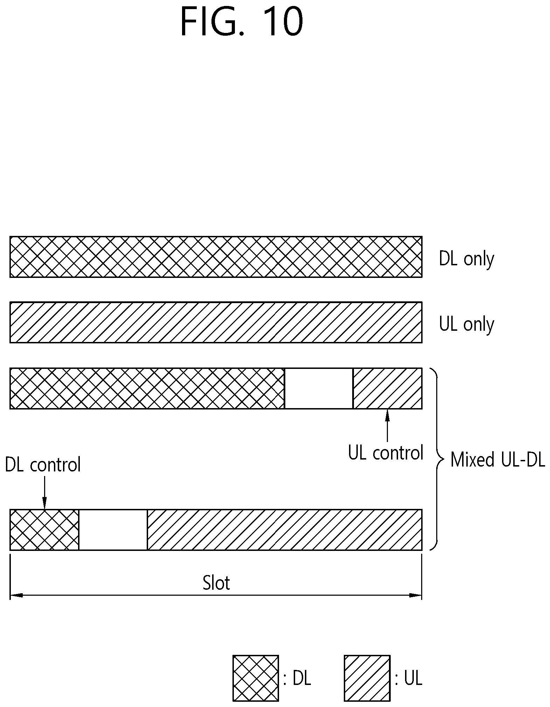

FIG. 10 illustrates a structure of a self-contained slot.

In an NR system, a DL control channel, DL or UL data, a UL control channel, and the like may be contained in one slot. For example, first N symbols (hereinafter, DL control region) in the slot may be used to transmit a DL control channel, and last M symbols (hereinafter, UL control region) in the slot may be used to transmit a UL control channel. N and M are integers greater than or equal to 0. A resource region (hereinafter, a data region) which exists between the DL control region and the UL control region may be used for DL data transmission or UL data transmission. For example, the following configuration may be considered. Respective durations are listed in a temporal order.
1. DL only configuration,
2. UL only configuration,
3. Mixed UL-DL configuration:
   DL region + Guard period (GP) + UL control region,
   DL control region + GP + UL region.
   DL region: (i) DL data region, (ii) DL control region + DL data region.
   UL region: (i) UL data region, (ii) UL data region + UL control region.

A PDCCH may be transmitted in the DL control region, and a physical downlink shared channel (PDSCH) may be transmitted in the DL data region. A physical uplink control channel (PUCCH) may be transmitted in the UL control region, and a physical uplink shared channel (PUSCH) may be transmitted in the UL data region. Downlink control information (DCI), for example, DL data scheduling information, UL data scheduling information, and the like, may be transmitted on the PDCCH. Uplink control information (UCI), for example, ACK/NACK information about DL data, channel state information (CSI), and a scheduling request (SR), may be transmitted on the PUCCH. A GP provides a time gap in a process in which a BS and a UE switch from a TX mode to an RX mode or a process in which the BS and the UE switch from the RX mode to the TX mode. Some symbols at the time of switching from DL to UL within a subframe may be configured as the GP.

### <Analog beamforming #1>

Wavelengths are shortened in millimeter wave (mmW) and thus a large number of antenna elements can be installed in the same area. That is, the wavelength is 1 cm at 30 GHz and thus a total of 100 antenna elements can be installed in the form of a 2-dimensional array at an interval of 0.5 lambda (wavelength) in a panel of 5×5 cm. Accordingly, it is possible to increase a beamforming (BF) gain using a large number of antenna elements to increase coverage or improve throughput in mmW.

In this case, if a transceiver unit (TXRU) is provided to adjust transmission power and phase per antenna element, independent beamforming per frequency resource can be performed. However, installation of TXRUs for all of about 100 antenna elements decreases effectiveness in terms of cost. Accordingly, a method of mapping a large number of antenna elements to one TXRU and controlling a beam direction using an analog phase shifter is considered. Such analog beamforming can form only one beam direction in all bands and thus cannot provide frequency selective beamforming.

Hybrid beamforming (BF) having a number B of TXRUs which is smaller than Q antenna elements can be considered as an intermediate form of digital BF and analog BF. In this case, the number of directions of beams which can be simultaneously transmitted are limited to B although it depends on a method of connecting the B TXRUs and the Q antenna elements.

### <Analog beamforming #2>

When a plurality of antennas is used in NR, hybrid beamforming which is a combination of digital beamforming and analog beamforming is emerging. Here, in analog beamforming (or RF beamforming) an RF end performs precoding (or combining) and thus it is possible to achieve the performance similar to digital beamforming while reducing the number of RF chains and the number of D/A (or A/D) converters. For convenience, the hybrid beamforming structure may be represented by N TXRUs and M physical antennas. Then, the digital beamforming for the L data layers to be transmitted at the transmitting end may be represented by an N by L matrix, and the converted N digital signals are converted into analog signals via TXRUs, and analog beamforming represented by an M by N matrix is applied.

System information of the NR system may be transmitted in a broadcasting manner. In this case, in one symbol, analog beams belonging to different antenna panels may be simultaneously transmitted. A scheme of introducing a beam RS (BRS) which is a reference signal (RS) transmitted by applying a single analog beam (corresponding to a specific antenna panel) is under discussion to measure a channel per analog beam. The BRS may be defined for a plurality of antenna ports, and each antenna port of the BRS may correspond to a single analog beam. In this case, unlike the BRS, a synchronization signal or an xPBCH may be transmitted by applying all analog beams within an analog beam group so as to be correctly received by any UE.

In the NR, in a time domain, a synchronization signal block (SSB, or also referred to as a synchronization signal and physical broadcast channel (SS/PBCH)) may consist of 4 OFDM symbols indexed from 0 to 3 in an ascending order within a synchronization signal block, and a PBCH related with a primary synchronization signal (PSS), secondary synchronization signal (SSS), and demodulation reference signal (DMRS) may be mapped to the symbols. As described above, the synchronization signal block may also be represented by an SS/PBCH block.

In NR, since a plurality of synchronization signal blocks(SSBs) may be transmitted at different times, respectively, and the SSB may be used for performing initial access (IA), serving cell measurement, and the like, it is preferable to transmit the SSB first when transmission time and resources of the SSB overlap with those of other signals. To this purpose, the network may broadcast the transmission time and resource information of the SSB or indicate them through UE-specific RRC signaling.

In NR, beams may be used for transmission and reception. If reception performance of a current serving beam is degraded, a process of searching for a new beam through the so-called Beam Failure Recovery (BFR) may be performed.

Since the BFR process is not intended for declaring an error or failure of a link between the network and a UE, it may be assumed that a connection to the current serving cell is retained even if the BFR process is performed. During the BFR process, measurement of different beams (which may be expressed in terms of CSI-RS port or Synchronization Signal Block (SSB) index) configured by the network may be performed, and the best beam for the corresponding UE may be selected. The UE may perform the BFR process in a way that it performs an RACH process related with a beam yielding a good measurement result.

Now, a transmission configuration indicator (hereinafter, TCI) state will be described. The TCI state may be configured for each CORESET of a control channel, and may determine a parameter for determining an RX beam of the UE, based on the TCI state.

For each DL BWP of a serving cell, a UE may be configured for three or fewer CORESETs. Also, a UE may receive the following information for each CORESET.
1) CORESET index p (one of 0 to 11, where index of each CORESET may be determined uniquely among BWPs of one serving cell),
2) PDCCH DM-RS scrambling sequence initialization value,
3) Duration of a CORESET in the time domain (which may be given in symbol units),
4) Resource block set,
5) CCE-to-REG mapping parameter,
6) Antenna port quasi co-location indicating quasi co-location (QCL) information of a DM-RS antenna port for receiving a PDCCH in each CORESET (from a set of antenna port quasi co-locations provided by a higher layer parameter called 'TCI-State'),
7) Indication of presence of Transmission Configuration Indication (TCI) field for a specific DCI format transmitted by the PDCCH in the CORESET, and so on.

QCL will be described. If a characteristic of a channel through which a symbol on one antenna port is conveyed can be inferred from a characteristic of a channel through which a symbol on the other antenna port is conveyed, the two antenna ports are said to be quasi co-located (QCLed). For example, when two signals A and B are transmitted from the same transmission antenna array to which the same/similar spatial filter is applied, the two signals may go through the same/similar channel state. From a perspective of a receiver, upon receiving one of the two signals, another signal may be detected by using a channel characteristic of the received signal.

In this sense, when it is said that the signals A and B are quasi co-located (QCLed), it may mean that the signals A and B have went through a similar channel condition, and thus channel information estimated to detect the signal A is also useful to detect the signal B. Herein, the channel condition may be defined according to, for example, a Doppler shift, a Doppler spread, an average delay, a delay spread, a spatial reception parameter, or the like.

A 'TCI-State' parameter associates one or two downlink reference signals to corresponding QCL types (QCL types A, B, C, and D, see Table 4).

**[Table 4]**

| QCL Type | Description |
|---|---|
| QCL-TypeA | Doppler shift, Doppler spread, Average delay, Delay spread |
| QCL-TypeB | Doppler shift, Doppler spread |
| QCL-TypeC | Doppler shift, Average delay |
| QCL-TypeD | Spatial Rx parameter |

Each 'TCI-State' may include a parameter for configuring a QCL relation between one or two downlink reference signals and a DM-RS port of a PDSCH (or PDCCH) or a CSI-RS port of a CSI-RS resource.

Meanwhile, for each DL BWP configured to a UE in one serving cell, the UE may be provided with 10 (or less) search space sets. For each search space set, the UE may be provided with at least one of the following information.

1) search space set index s (0≤s<40), 2) an association between a CORESET p and the search space set s, 3) a PDCCH monitoring periodicity and a PDCCH monitoring offset (slot unit), 4) a PDCCH monitoring pattern within a slot (e.g., indicating a first symbol of a CORSET in a slot for PDCCH monitoring), 5) the number of slots in which the search space set s exists, 6) the number of PDCCH candidates per CCE aggregation level, 7) information indicating whether the search space set s is a CSS (common search space) or a USS (UE-specific search space), and the like.

In the NR, a CORESET#0 may be configured by a PBCH (or a UE-dedicated signaling for handover or a PSCell configuration or a BWP configuration). A search space (SS) set#0 configured by the PBCH may have monitoring offsets (e.g., a slot offset, a symbol offset) different for each associated SSB. This may be required to minimize a search space occasion to be monitored by the UE. Alternatively, this may be required to provide a beam sweeping control/data region capable of performing control/data transmission based on each beam so that communication with the UE is persistently performed in a situation where a best beam of the UE changes dynamically.

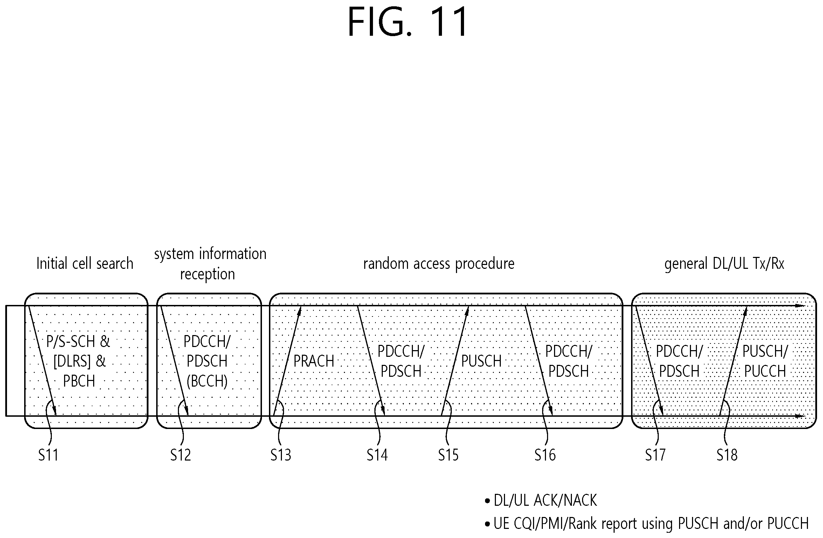

FIG. 11 illustrates physical channels and typical signal transmission.

Referring to FIG. 11, in a wireless communication system, a UE receives information from a BS through a downlink (DL), and the UE transmits information to the BS through an uplink (UL). The information transmitted/received by the BS and the UE includes data and a variety of control information, and there are various physical channels according to a type/purpose of the information transmitted/received by the BS and the UE.

The UE which is powered on again in a power-off state or which newly enters a cell performs an initial cell search operation such as adjusting synchronization with the BS or the like (S11). To this end, the UE receives a primary synchronization channel (PSCH) and a secondary synchronization channel (SSCH) from the BS to adjust synchronization with the BS, and acquire information such as a cell identity (ID) or the like. In addition, the UE may receive a physical broadcast channel (PBCH) from the BS to acquire broadcasting information in the cell. In addition, the UE may receive a downlink reference signal (DL RS) in an initial cell search step to identify a downlink channel state.

(Initial) cell search can be said to be a procedure in which the UE obtains time and frequency synchronization with a cell and detects the cell ID of the cell. Cell search may be based on the cell's primary synchronization signal and secondary synchronization signal, and PBCH DMRS.

Upon completing the initial cell search, the UE may receive a physical downlink control channel (PDCCH) and a physical downlink control channel (PDSCH) corresponding thereto to acquire more specific system information (S12).

Thereafter, the UE may perform a random access procedure to complete an access to the BS (S13 ~ S16). Specifically, the UE may transmit a preamble through a physical random access channel (PRACH) (S13), and may receive a random access response (RAR) for the preamble through a PDCCH and a PDSCH corresponding thereto (S14). Thereafter, the UE may transmit a physical uplink shared channel (PUSCH) by using scheduling information in the RAR (S15), and may perform a contention resolution procedure such as the PDCCH and the PDSCH corresponding thereto (this can be said to be the process of receiving a competition resolution message) (S16).

After performing the aforementioned procedure, the UE may perform PDCCH/PDSCH reception (S17) and PUSCH/physical uplink control channel (PUCCH) transmission (S18) as a typical uplink/downlink signal transmission procedure. Control information transmitted by the UE to the BS is referred to as uplink control information (UCI). The UCI includes hybrid automatic repeat and request (HARQ) acknowledgement (ACK)/negative-ACK (NACK), scheduling request (SR), channel state information (CSI), or the like. The CSI includes a channel quality indicator (CQI), a precoding matrix indicator (PMI), a rank indication (RI), or the like. In general, the UCI is transmitted through the PUCCH. However, when control information and data are to be transmitted simultaneously, the UCI may be transmitted through the PUSCH. In addition, the UE may aperiodically transmit the UCI through the PUSCH according to a request/indication of a network.

In order to enable reasonable battery consumption when bandwidth adaptation (BA) is configured, only one uplink BWP and one downlink BWP or only one downlink/uplink BWP pair for each uplink carrier may be activated at once in an active serving cell, and all other BWPs configured in the UE are deactivated. In the deactivated BWPs, the UE does not monitor the PDCCH, and does not perform transmission on the PUCCH, PRACH, and UL-SCH.

For the BA, RX and TX bandwidths of the UE are not necessarily as wide as a bandwidth of a cell, and may be adjusted. That is, it may be commanded such that a width is changed (e.g., reduced for a period of low activity for power saving), a position in a frequency domain is moved (e.g., to increase scheduling flexibility), and a subcarrier spacing is changed (e.g., to allow different services). A subset of the entire cell bandwidth of a cell is referred to as a bandwidth part (BWP), and the BA is acquired by configuring BWP(s) to the UE and by notifying the UE about a currently active BWP among configured BWPs. When the BA is configured, the UE only needs to monitor the PDCCH on one active BWP. That is, there is no need to monitor the PDCCH on the entire downlink frequency of the cell. A BWP inactive timer (independent of the aforementioned DRX inactive timer) is used to switch an active BWP to a default BWP. That is, the timer restarts when PDCCH decoding is successful, and switching to the default BWP occurs when the timer expires.

Hereinafter, an integrated access and backhaul link (IAB) will be described. Hereinafter, for convenience of description, a proposed method will be described based on a new RAT (NR) system. However, the range of the system to which the proposed method is applied is expandable to other systems such as 3GPP LTE/LTE-A systems in addition to the NR system.

One of the potential technologies aimed at enabling future cellular network deployment scenarios and applications is support for wireless backhaul and relay links, and it enables flexible and highly dense deployment of NR cells without the need to proportionally densify the transport network.

It is expected that greater bandwidth in NR compared to LTE will be available (e.g., mmWave spectrum) with the native deployment of massive MIMO or multi-beam systems, thus, occasions are created for the development and deployment of integrated access and backhaul links. This makes it easier of a dense network of self-backhauled NR cells in a more integrated manner by establishing multiple control and data channels/procedures defined to provide access or access to the UEs. Such systems are referred to as integrated access and backhaul links (IAB).

This disclosure defines the following.
- AC (x): an access link between the node (x) and the UE(s).
- BH (xy): a backhaul link between the node (x) and the node (y).

In this case, the node may mean a donor gNB (DgNB) or a relay node (RN). Here, the DgNB or the donor node may be a gNB that provides a function to support backhaul to IAB nodes.

When relay node 1 and relay node 2 exist, relay node 1 which is connected to relay node 2 by a backhaul link and relaying data transmitted and received to relay node 2 is called a parent node of relay node 2, and relay node 2 is called a child node of relay node 1.

### <PUSCH repetitions>

PUSCH repetition types A and B were introduced in the standard specifications (e.g., NR Rel-15/16). Transmission is performed as follows depending on the PUSCH repetition type.

### 1) PUSCH repetition type A

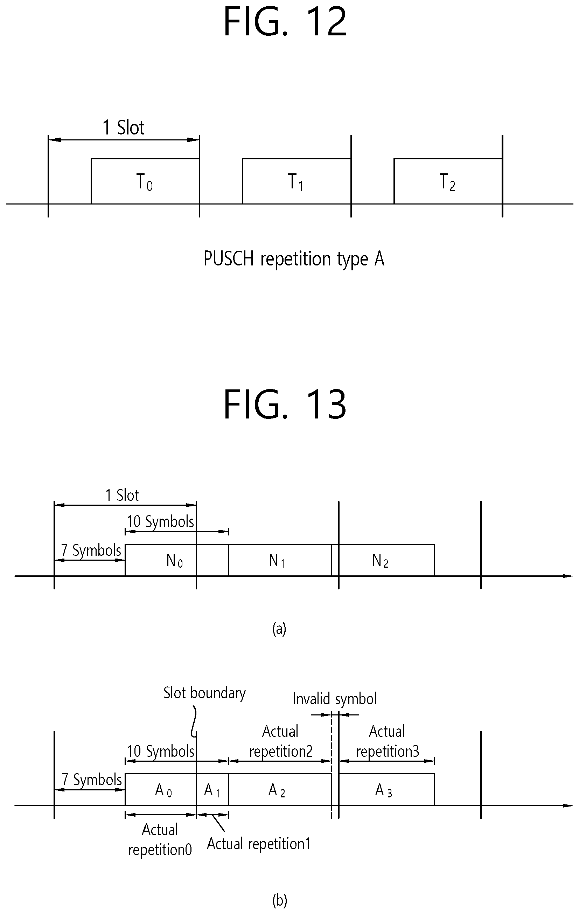

FIG. 12 is an example of PUSCH repetition type A.

Referring to FIG. 12, PUSCH repetition type A is a slot-based PUSCH repetition transmission, and repetition is performed with the same PUSCH transmission start symbol position and PUSCH transmission symbol length for each slot, as illustrated in FIG. 12. At this time, if there is an invalid symbol that cannot be used for PUSCH transmission among the symbol resources that constitute a specific PUSCH repetition, the transmission of the corresponding PUSCH repetition is dropped and not performed. For example, when a total of four PUSCH repetition transmissions of Rep0, Rep1, Rep2, and Rep3 are performed in slots N, N+1, N+2, and N+3 (one PUSCH repetition is transmitted in each slot), if the symbol resources constituting Rep1 include an invalid symbol, the transmission of Rep1 is dropped, and only the transmissions of Rep0, Rep2, and Rep3 are performed. Therefore, the actual number of repetitions performed may be less than the configured number of repetitions.

For PUSCH repetition type A, frequency hopping can be configured for the UE by higher layer parameters. One of two frequency hopping modes can be configured.
i) Frequency hopping within a slot (intra-slot frequency hopping) is applicable to single slot and multi-slot PUSCH transmission.
ii) Inter-slot frequency hopping is applicable to multi-slot PUSCH transmission.

### 2) PUSCH repetition type B

FIG. 13 is an example of PUSCH repetition type B.

Referring to FIG. 13, PUSCH repetition type B is repeated in units of the symbol length in which the actual PUSCH is transmitted. For example, as in (a) of FIG. 13, when PUSCH is transmitted through 10 symbols, PUSCH repetition is performed in units of 10 consecutive symbols. At this time, repetition that determines PUSCH repetition transmission time resources without considering slot boundaries, invalid symbols, etc. is called nominal repetition. (a) of FIG. 13 shows an example in which three nominal repetitions (denoted as N0, N1, and N2) are configured.

However, in the case of actual PUSCH repetition, a single PUSCH cannot be transmitted while including a slot boundary. That is, if a nominal PUSCH transmission includes a slot boundary (e.g., N0, N2 in (a) of FIG. 13), two actual repetitions are performed with the slot boundary as the boundary, as in (b) of FIG. 13. For example, a nominal repetition N0 is performed with two actual repetitions, such as A0, A1, with the slot boundary as the boundary.

Additionally, a single PUSCH transmission can only be performed using consecutive symbols. If an invalid symbol exists in the time resource where a PUSCH repetition should be transmitted, the actual repetition is formed using consecutive symbols with the invalid symbol as the boundary. For example, if symbols #0 to #9 constitute a nominal repetition and symbols #3 to #5 are invalid symbols, symbols #0 to #2 and symbols #6 to #9, excluding the invalid symbol, each constitute an actual repetition.

Invalid symbols may include the following:
i) Downlink symbol configured by semi-static TDD UL-DL configuration,
ii) an invalid symbol pattern configured by RRC (which may be configured by the invalid symbol pattern indicator),
iii) SSB symbol configured by SIB1, SSB symbol configured by 'ServngCellConfigCommon',
iv) Symbol for PDCCH for SIB1,
v) Invalid symbol for DL-UL switching configured by RRC.

If a symbol that cannot be used for PUSCH transmission (e.g., a DL symbol indicated by DCI format 2_0) is included within one actual repetition resource, the corresponding actual repetition transmission is dropped and not performed.

Now, full duplex operation will be described.

In 5G, new service types such as extended reality (XR), artificial intelligence-based service, and self-driving car are emerging. These services have characteristics that dynamically change traffic in both downlink (DL) and uplink (UL) directions, and require low latency for traffic (e.g., packets) to be transmitted. In 5G services, traffic will increase explosively to support these various new use cases.

Existing semi-static or dynamic TDD UL/DL configurations have limitations such as transmission time delay and interference between operators. The existing FDD method has limitations in terms of efficient frequency resource utilization in the DL/UL direction. Therefore, for low latency and efficient resource utilization in NR, the introduction of full duplex operation within a single carrier is being discussed.

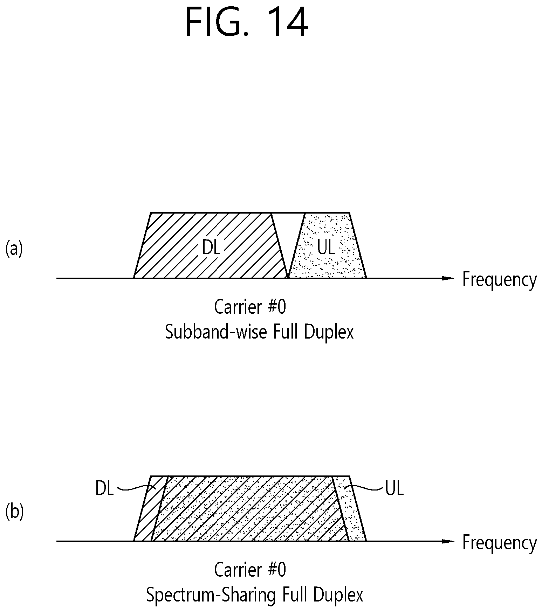

FIG. 14 shows examples of how to apply full duplex within an intra-carrier.

Referring to FIG. 14, the full duplex method includes subband-wise full duplex (hereinafter, it can be called subband full duplex or SBFD) as shown in (a) of FIG. 14 and spectrum sharing full duplex (hereinafter, it can be called SSFD) as shown in (b) of FIG. 14 may be considered.

In the case of SBFD, DL and UL are transmitted and received through different frequency resources within the same carrier (e.g., carrier #0). That is, different frequency resources are used in DL and UL for the same time resource.

In the case of SSFD, DL and UL are transmitted and received through the same or overlapped frequency resources within the same carrier (e.g., carrier #0). That is, the same or overlapping frequency resources can be used in DL and UL for the same time resource.

This full-duplex (FD) operation can also be used in combination with the existing half-duplex (HD) operation. For example, among time resources used for existing half-duplex-based TDD operation, some time resources may be used for full duplex operation. SBFD or SSFD operations can be performed on time resources that perform full duplex operations.

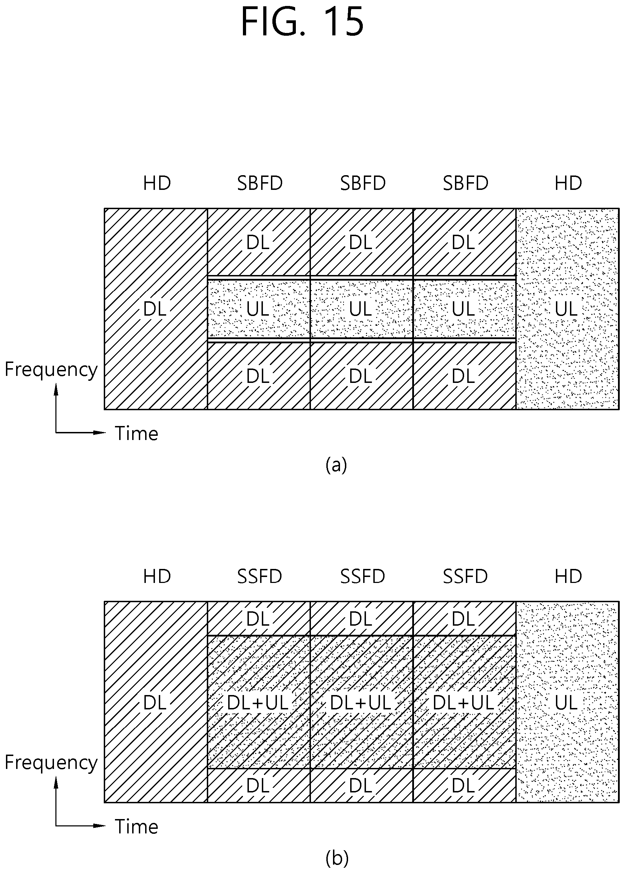

FIG. 15 shows an example in which a time resource operating in half duplex (HD) and a time resource operating in full duplex (FD) such as SBFD or SSFD exist together.

In (a) of FIG. 15, some time resources operating as SBFD are indicated as SBFD, and time resources operating as HD are indicated as HD. In (b) of FIG. 15, some time resources operating as SSFD are indicated as SSFD, and time resources operating as HD are indicated as HD. The unit of time resource may be, for example, a slot or symbol.

In time resources operating as SBFD, some frequency resources are used as DL resources, and other frequency resources are used as UL resources. Between the DL frequency resource and the UL frequency resource, there may be a guard subband that is unused and empty for both DL and UL. Guard subbands may also be referred to by other terms, such as guard frequency resources or guard subcarrier(s).

In time resources operating with SSFD, the entire frequency resource can be used for both DL and UL. Or, to reduce the impact of interference from other adjacent carriers (this may be referred to as ACI (adjacent carrier interference)), some frequency resources at one or both ends of the carrier may not be used for DL and/or UL. That is, one or both ends of the carrier can be used as an unused guard band (guard subband) for both DL and UL. Alternatively, to reduce ACI on UL reception, one or both ends of the carrier may be used only for DL transmission.

In this disclosure, a slot resource that operates as HD is referred to as a HD slot, and a slot resource that operates as SBFD and a slot resource that operates as SSFD are referred to as a SBFD slot and a SSFD slot, respectively. The SBFD slot and the SSFD slot are also collectively referred to as FD slots.

In the present disclosure, in time resources operating as FD, among all frequency resources, frequency resources operating as DL may be referred to as a DL subband, and frequency resources operating as UL may be referred to as an UL subband, for convenience.

In the case of full duplex operation, both the base station and the UE can perform full duplex operation. That is, both the base station and the UE can simultaneously perform DL and UL transmission and reception using the same or different frequency resources in the same time resource.

Alternatively, only the base station can perform full duplex operation and the UE can perform half duplex operation. The base station can simultaneously perform transmission and reception of DL and UL using the same or different frequency resources in the same time resource, but the UE only performs DL reception or UL transmission in a specific time resource. In this case, the base station performs full duplex operation by performing DL transmission and UL reception with different UEs at the same time.

The content of the present disclosure is described assuming that the base station performs/supports a full duplex operation, but the UE performs/supports a half duplex operation. However, the content of the present disclosure can be applied even when both the base station and the UE perform/support full duplex operation.

### <A. Characteristics of DL/UL time/frequency resources for SBFD and SSFD operation>

A cell (base station) can perform both DL transmission and UL reception in the same time resource in an FD scheme such as SBFD or SSFD. For example, the base station may perform HD operation in a first time resource and FD operation in a second time resource (which may be a time resource other than the first time resource).

Through such operations, the network may vary a time resource for performing transmission and reception between a first time resource and a second time resource depending on a type of a signal/channel to be transmitted and received or depending on a UE performing transmission and reception. For example, for important signals/channels (e.g., an SSB and a PRACH) that are less affected by interference and for which transmission and reception performance needs to be improved, resources may be configured such that transmission and reception are performed only in the first time resource operating only in half duplex. Through this, transmission and reception performance of the signals/channels may be maintained while applying full duplex to a cell. Alternatively, in a case of a UE that is significantly affected by CLI (cross link interference) and thus is unable to properly perform transmission and reception when operating in full duplex in the second time resource, transmission and reception performance for the UE may be ensured by configuring resources such that transmission and reception are performed in the first time resource.

The UE/base station performs a DL operation or an UL operation in all frequency resources constituting an entire system bandwidth in a first time resource in which an HD operation is performed. Within the first time resource performing the HD operation, the network performs the DL operation through the 1-1 time resource and the UL operation through the 1-2 time resource. At this time, the 1-1 time resource and the 1-2 time resource do not overlap with each other.

In the second time resource performing the FD operation, the UE/base station performs DL operations through all or part of the frequency resources (first frequency resources) among the frequency resources that constitute the system BW of the cell, and performs UL operations through all or part of the frequency resources (second frequency resources).

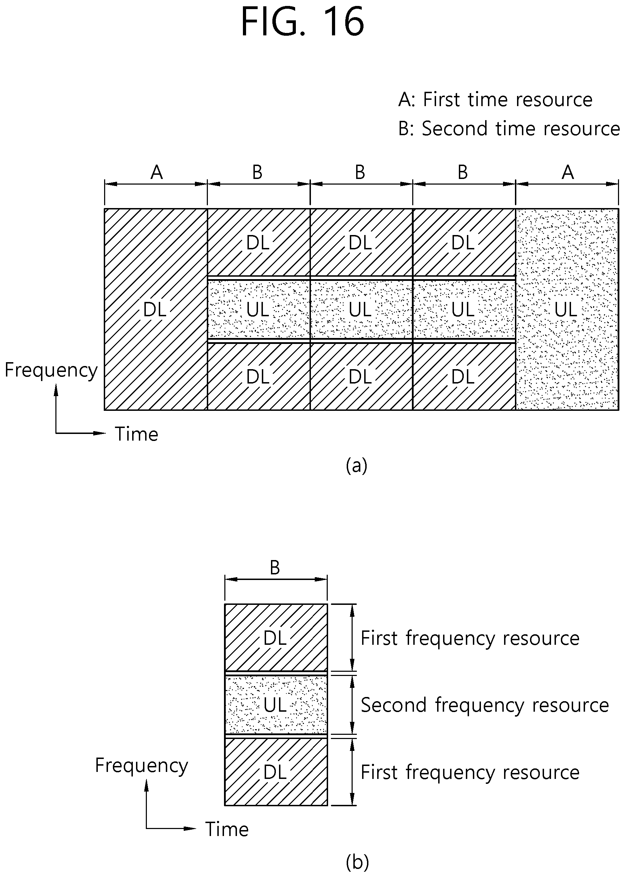

FIG. 16 shows examples of a first time resource, a second time resource, a first frequency resource, and a second frequency resource.

Referring to (a) of FIG. 16, in the first time resource (represented by A), the device is operated in HD. In the second time resource (represented by B), for example, the device may be operated as SBFD. In the first time resource, the resource indicated by DL corresponds to the above-described 1-1 time resource, and the resource indicated by UL corresponds to the above-described 1-2 time resource.

Referring to (b) of FIG. 16, in the second time resource, the frequency resource operating as DL corresponds to the above-described first frequency resource, and the frequency resource operating as UL corresponds to the above-described second frequency resource.

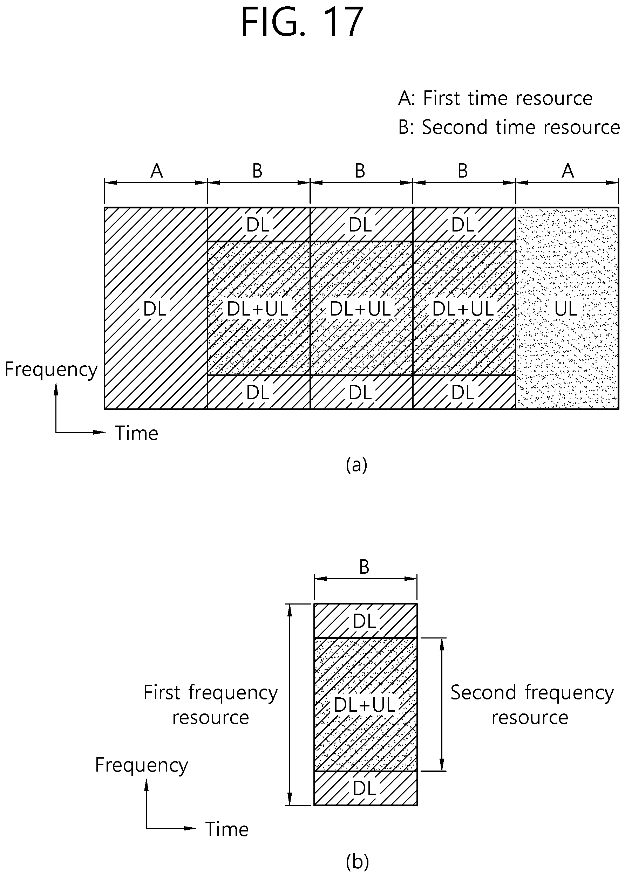

FIG. 17 shows another example of a first time resource, a second time resource, a first frequency resource, and a second frequency resource.

Referring to (a) of FIG. 17, in the first time resource (denoted by A), the device operates as a half-duplex. In the second time resource (labelled B), the device may operate, for example, as an SSFD. In the first time resource, the resource denoted DL corresponds to the 1-1 time resource described above, and the resource denoted UL corresponds to the 1-2 time resource described above.

Referring to (b) of FIG. 17, in the second time resource, the frequency resources operating as DL and DL+UL correspond to the first frequency resource described above, and the frequency resources operating as DL+UL correspond to the second frequency resource described above.

The first frequency resource and/or the second frequency resource may have all or some of the following characteristics.
1) When performing SBFD operation, the first frequency resource and the second frequency resource do not overlap with each other. This is to ensure that DL and UL operations are performed through different frequency resources. At this time, there may be frequency resources that do not correspond to both the first and second frequency resources, and these frequency resources are called guard subbands or guard frequency resources. These guard frequency resources may be needed to reduce interference from DL transmission on UL reception. The guard frequency resource may be located between the first frequency resource and the second frequency resource.
2) When performing SSFD operation, the first frequency resource and the second frequency resource may overlap. At this time, there may be frequency resources that do not correspond to both the first and second frequency resources, and these frequency resources are called guard subbands or guard frequency resources. These guard frequency resources may be needed to reduce interference from DL transmission on adjacent carriers to UL reception and/or to reduce interference from DL transmission on UL reception on adjacent carriers.
3) When performing an SBFD operation, the second frequency resource may be composed of contiguous frequency resources, and the first frequency resource may be composed of non-contiguous frequency resources. At this time, the first frequency resource may be composed of a plurality of non-contiguous sets (for example, two), and each set may be composed of contiguous frequency resources. This is to reduce interference from DL transmission on adjacent carriers to UL resources by placing the second frequency resource used for UL at the center of the frequency resources constituting the cell. Conversely, the first frequency resource may be composed of contiguous frequency resources, and the second frequency resource may be composed of non-contiguous frequency resources. At this time, the second frequency resource may be composed of multiple (e.g., two) non-contiguous sets and each set may be composed of contiguous frequency resources. This is to reduce interference from DL transmission on UL resources in adjacent carriers by placing the second frequency resource used for DL at the center of the frequency resources constituting the cell.
4) When performing SSFD operation, the second frequency resource may be composed of some frequency resources of the first frequency resource. At this time, the second frequency resource may be configured to have fewer X physical resource blocks (PRBs) on one or both edges of a carrier than the first frequency resource. This is to reduce interference from DL transmission on adjacent carriers to UL reception.

Through the operations described above, the base station may perform a half duplex operation in which only one of DL transmission or UL reception is performed in all frequency resources constituting the cell in a first time resource, and may perform a full duplex operation in which DL transmission is performed through first frequency resources within frequency resources constituting the cell and, simultaneously, UL reception is performed through second frequency resources within the frequency resources constituting the cell in a second time resource.

The network determines the 'first time resource' and 'second time resource', and the 'first frequency resource' and 'second frequency resource' as described above, and provides all or part of the corresponding information to the UE. The network may perform DL transmission to the UE in a 1-1 time resource within a first time resource and in first frequency resources within a second time resource, and may perform UL reception from the UE in a first-2 time resource within the first time resource and in second frequency resources within the second time resource.

The UE may be provided with all or some of information regarding the above-described 'first time resource' and 'second time resource' and 'first frequency resources' and 'second frequency resources' from the network, and may determine positions of the resources. The UE may perform DL reception from the network through all or some of a 1-1 time resource within a first time resource and first frequency resources within a second time resource, and may perform UL transmission to the network in a first-2 time resource within the first time resource and second frequency resources within the second time resource.

Meanwhile, in a TDD carrier of the legacy NR, a base station performs only an operation for one of downlink or uplink in a specific time resource. In this case, in a time resource in which an SSB is transmitted, the base station always operates in downlink.

In a case of a UE operating in the legacy TDD, the following is assumed for symbols in which an SSB (SS/PBCH) is transmitted.
1) An SS/PBCH transmission symbol may not be configured as uplink by a TDD configuration (e.g., 'TDD-UL-DL-ConfigCommon' and/or 'TDD-UL-DL-ConfigDedicated').
2) The SS/PBCH transmission symbol may not be configured as uplink in SFI (slot format indication) by a DCI format 2_0.
3) When an SS/PBCH is transmitted in a symbol configured as flexible by a TDD configuration (e.g., 'TDD-UL-DL-ConfigCommon' and/or 'TDD-UL-DL-ConfigDedicated'), when uplink transmission of the UE overlaps the SS/PBCH symbol, the uplink transmission is not performed. In a case of an SRS, when the SRS overlaps the SS/PBCH symbol in a flexible symbol, SRS transmission is not performed in the overlapped symbol(s).

Meanwhile, in FD such as SBFD and SSFD, both DL resources and UL resources may exist in the same time resource from a cell perspective. Accordingly, the base station may perform uplink reception while performing downlink transmission. Therefore, even when an SS/PBCH is transmitted in a time resource in which a cell performs an FD operation, the base station may perform uplink reception while transmitting the SS/PBCH.

Meanwhile, in the current standard specification, the UE is unable to perform uplink transmission in a symbol resource in which the SS/PBCH is transmitted. That is, in an SS/PBCH transmission time resource of the base station, the UE is unable to perform the FD operation.

When a specific time resource is configured as a time resource operating in SBFD (SBFD symbol), both DL and UL resources may exist in that time resource. In this case, if there is no UL signal for the base station to receive in that time resource, the base station may only perform DL transmissions. In SBFD resources, DL transmission is only within the DL subband. Therefore, even if there is no UL signal transmitted in the UL subband, DL transmission may only be performed within the DL subband.

In this case, if the base station has no UL transmissions to receive, even if the specific time resource is a resource determined to be SBFD symbol, it may consider performing DL transmissions outside the DL subband as well as in the DL subband to improve DL throughput. That is, it may consider performing DL transmissions in the full band.

That is, in resources determined to be SBFD symbol, it may consider a fallback to TDD operation where DL or UL operation is performed over the full band, rather than SBFD operation over DL/UL subbands.

In the present disclosure, description is provided assuming an SBFD operation in which a cell simultaneously performs DL and UL by using different frequency resources (e.g., subbands) in the same time resource. However, the disclosure of the present disclosure may be applied even when the cell performs an SSFD operation.

In a wireless communication system, i) a base station may perform a full duplex operation and a UE may perform a half duplex operation, or ii) the base station may perform the half duplex operation and the UE may perform the full duplex operation. Alternatively, iii) both the base station and the UE may support the full duplex operation.

A UE knowing that the base station is capable of performing the full duplex operation may be referred to hereinafter as an FD-aware UE. A UE knowing that the base station is capable of performing an SBFD operation may be referred to hereinafter as an SBFD-aware UE. A UE knowing that the base station is capable of performing an SSFD operation may be referred to hereinafter as an SSFD-aware UE.

When the base station supports both performing the half duplex operation and performing the full duplex operation, the base station may inform the UE of information regarding resources (time and/or frequency) in which half duplex and full duplex may be performed (or are expected to be performed, or are to be performed).

When the base station is a full duplex base station capable of performing an SSFD operation, UL reception may be simultaneously possible in some and/or all frequency resources in which DL transmission of the base station is possible. That is, in some frequency resources, not only DL transmission/reception but also UL reception/transmission may be possible. In this case, information regarding frequency resources in which SSFD is possible may be delivered to the UE. Also, information regarding time resources in which SSFD is possible may be delivered to the UE.

In a case of a full duplex UE, UL transmission may be simultaneously possible in some and/or all frequency resources in which DL reception of the UE is possible. In the present disclosure, a UE performing a half duplex operation may be referred to as an HD UE, and a UE capable of performing (or performing) a full duplex operation may be referred to as an FD UE.

When the base station performs a full duplex operation such as SBFD and SSFD, the base station may perform an SSFD operation and/or an SBFD operation only for some time/frequency resources. When an SBFD-aware UE and/or an SSFD-aware UE knows time/frequency resources in which the cell performs the SSFD operation and/or the SBFD operation, the UE may perform operations differently according to resources in which the cell operates in half duplex (HD), resources in which the cell operates in SBFD, and resources in which the cell operates in SSFD. For example, the UE may perform transmission and reception by determining, differently according to HD resources, SBFD resources, and SSFD resources, time/frequency resources in which the UE performs reception of a DL signal/channel and/or transmission of an UL signal/channel.

The base station may perform a half duplex operation in which only one of DL transmission or UL reception is performed in all frequency resources constituting the cell in time resources operating in HD, and may perform a full duplex operation in which DL transmission is performed through first frequency resources (i.e., DL subband resources) within frequency resources constituting the cell and, simultaneously, UL reception is performed through second frequency resources (i.e., UL subband resources) within the frequency resources constituting the cell in time resources operating in SBFD and SSFD.

For this purpose, the base station determines time resources corresponding to a first time resource (i.e., an HD symbol) and a second time resource (i.e., an FD symbol), and transmits, to the UE, configuration information regarding the first time resource (i.e., the HD symbol) and/or the second time resource (i.e., the FD symbol). The FD symbol may include both an SBFD symbol and an SSFD symbol. More specifically, the base station may determine/determine time resources corresponding to the HD symbol, the SBFD symbol, and/or the SSFD symbol, and may transmit, to the UE, configuration information regarding the HD symbol, the SBFD symbol, and/or the SSFD symbol.

In this case, DL subband resources and/or UL subband resources may be configured differently in time resources operating in SBFD and time resources operating in SSFD. In time resources operating in SBFD, DL subband resources and UL subband resources are configured to not overlap each other. In contrast, in time resources operating in SSFD, DL subband resources and UL subband resources may be configured to overlap each other. The DL subband/UL subband resources may be configured with some frequency resources of a system bandwidth or may be configured with all frequency resources.

The UE receives configuration information regarding the HD symbol, the SBFD symbol, and/or the SSFD symbol from the network, and determines positions of the HD symbol, the SBFD symbol, and/or the SSFD symbol. In this case, in the HD symbol, the UE performs DL reception (UL transmission) through all frequency resources configured for the UE to operate DL reception (UL transmission). Also, in the SBFD symbol and/or the SSFD symbol, the UE performs DL reception (UL transmission) through DL subband resources (UL subband resources) that are the same as or limited (smaller) than frequency resources in which the UE performs DL reception (UL transmission) in the HD symbol. In this case, even when frequency resources not corresponding to the DL subband resources (UL subband resources) are configured for DL reception (UL transmission) in the SBFD symbol and/or the SSFD symbol resources, the UE does not perform DL reception (UL transmission) in frequency resources not corresponding to the DL subband resources (UL subband resources).

Now, a method in which a device determines a time resource (e.g., a slot) for transmitting UCI (e.g., HARQ-ACK, SR (scheduling request), CSI (channel state information), etc.) and transmits the UCI in the determined time resource will be described. For convenience, HARQ-ACK will first be described as an example of the UCI.

First, a method of determining a slot position in which the UE feeds back HARQ-ACK information for PDSCH reception according to the existing standard specification will be described.

For SPS PDSCH reception ending in a DL slot n_{D}, the UE transmits HARQ-ACK information for the SPS PDSCH through a PUCCH of a UL slot n+k. Here, k is provided by a 'PDSCH-to-HARQ feedback timing indicator (PDSCH-to-HARQ_feedback timing indicator)' field (if present) of a DCI format activating the SPS PDSCH reception.

If the UE receives a DCI format activating SPS PDSCH reception ending in the DL slot n_{D} or scheduling PDSCH reception, and the DCI format does not include a 'PDSCH-to-HARQ feedback timing indicator (PDSCH-to-HARQ_feedback timing indicator)', the UE transmits/provides HARQ-ACK information in PUCCH transmission of the UL slot n+k, where k is provided by a higher layer parameter 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'.

If the UE receives a DCI format scheduling PDSCH receptions ending in the DL slot n_{D}, or detects a DCI format generating HARQ-ACK information bits but not scheduling PDSCH reception through PDCCH reception ending in the DL slot n_{D}, the UE transmits/provides the corresponding HARQ-ACK information in PUCCH transmission of the UL slot n+k. Here, k is the number of slots, and is indicated by a 'PDSCH-to-HARQ feedback timing indicator (PDSCH-to-HARQ_feedback timing indicator)' field (if present) of the DCI format, or is provided by a higher layer parameter 'dl-DataToUL-ACK', 'dl-DataToUL-ACK-r16', 'dl-DataToUL-ACK-DCI-1-2', 'dl-DataToUL-ACK-r17', 'd1-DataToUL-ACK-DCI-1-2-r17', or 'dl-DataToUL-ACK-v1700'.

In the present disclosure, in intra-carrier full duplex operation, a method of determining a slot resource in which the UE transmits UCI will be described in consideration of a time resource in which a cell operates in FD and a time resource in which the cell operates in HD. That is, in the method according to the present disclosure, the method of the existing standard specification may be changed in consideration of the time resource in which the cell operates in FD and the time resource in which the cell operates in HD.

For a cell operating in FD, the cell may operate in half duplex (HD) or full duplex (FD) depending on the time resource. In the case of time/frequency resources operating in full duplex (FD), a channel environment may be poorer than that of resources operating in half duplex (HD) due to cross-link interference (CLI), self-interference (SI), and the like. Therefore, when UCI transmission through PUCCH or PUSCH is performed in FD resources based on a channel environment in HD resources, the UCI may not be properly transmitted.

Accordingly, the present disclosure proposes a method in which the UE transmits UCI, if possible, in a slot in which the cell operates in HD rather than in a slot in which the cell operates in FD.

Considering that the UE may perform FD operation and whether the UE operates in HD/FD may vary for each time resource, in the present disclosure, a 'resource in which a cell operates in HD' and a 'resource in which a cell operates in FD' may be interpreted as being replaced by a 'resource in which a UE operates in HD' and a 'resource in which a UE operates in FD', respectively.

Hereinafter, a method of determining a UCI transmission slot resource such that a slot resource in which a UE transmits UCI (uplink control information) becomes an HD resource is proposed.

### Method 1. Delayed UCI transmission

When the UE determines, according to the existing standard specification, that the UE transmits UCI (e.g., HARQ-ACK, SR (scheduling request), CSI (channel state information), etc.) in slot m (an FD slot) (that is, when the UE is configured to transmit the UCI in slot m, which is the FD slot, according to the existing standard specification), in the present disclosure, the UE may determine, as a slot for transmitting the UCI, an HD slot closest to slot m among slots after slot m (let this be referred to as slot m'), and may transmit the UCI in the corresponding slot.

When slot m is an HD slot, the UE transmits the UCI in slot m, and when slot m is an FD slot, the UE determines the earliest HD slot after slot m+1 as a slot for transmitting the UCI. Since this example relates to transmission of the UCI by the UE, the HD slot may be interpreted as a UL slot.

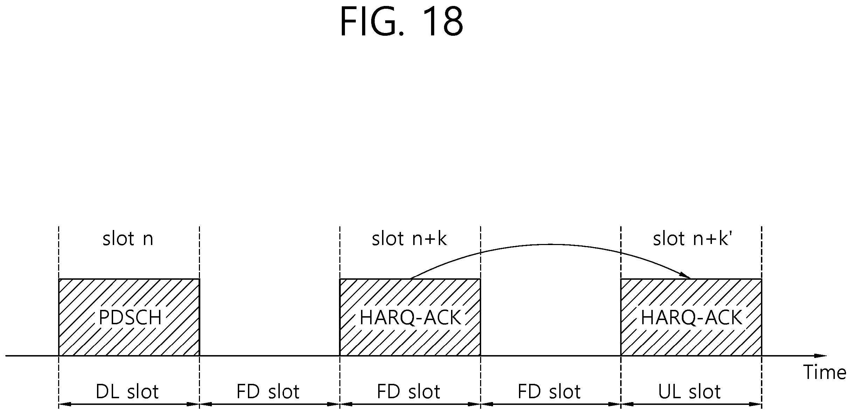

FIG. 18 illustrates a method for transmitting HARQ-ACK information of a UE.

In FIG. 18, a DL slot and a UL slot mean an HD slot.

For example, when the UE receives a PDSCH for which reception ends in slot n, the UE may be configured to transmit HARQ-ACK information for the corresponding PDSCH in slot n+k. Here, k is the number of slots, and may be indicated by a 'PDSCH-to-HARQ feedback timing indicator (PDSCH-to-HARQ_feedback timing indicator)' field (if present) of a DCI format, or may be provided by 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700' included in a higher layer message (for example, 'PUCCH-Config' used to configure UE-specific PUCCH parameters).

In this case, when slot n+k is an FD slot, the UE may determine, as a slot for transmitting the UCI, the earliest HD slot existing after slot n+k (e.g., slot n+k', which is a UL slot), and may transmit the UCI in the corresponding slot.

In the present disclosure, an HD slot and an FD slot may more specifically mean the following.

An HD slot may mean a slot in which all symbols within the slot operate in HD. That is, when all symbols within the slot are symbols allocated for HD operation, the slot may be referred to as an HD slot.

An FD slot may mean i) a slot in which all symbols within the slot operate in FD. That is, when all symbols within the slot are symbols allocated for FD operation, the slot may be referred to as an HD slot. Alternatively, the FD slot may mean ii) a case in which at least one symbol within the slot is a symbol operating in FD.

Alternatively, in the present disclosure, an HD slot may mean, when the UE receives a specific DL signal/channel in the corresponding slot, a slot in which all symbols in which the corresponding DL signal/channel is received are symbols operating in HD, and, when the UE transmits a specific UL signal/channel in the corresponding slot, a slot in which all symbols in which the corresponding UL signal/channel is transmitted are symbols operating in HD.

An FD slot may mean, when the UE receives a specific DL signal/channel in the corresponding slot, a slot in which all symbols in which the corresponding DL signal/channel is received are symbols operating in FD, and, when the UE transmits a specific UL signal/channel in the corresponding slot, a slot in which all symbols in which the corresponding UL signal/channel is transmitted are symbols operating in FD.

Alternatively, an FD slot may mean, when the UE receives a specific DL signal/channel in the corresponding slot, a slot in which at least one symbol among symbols in which the corresponding DL signal/channel is received is a symbol operating in FD, and, when the UE transmits a specific UL signal/channel in the corresponding slot, a slot in which at least one symbol among symbols in which the corresponding UL signal/channel is transmitted is a symbol operating in FD.

In the present disclosure, a symbol/slot operating in HD may mean a symbol/slot for which the UE is semi-statically configured by the base station such that a cell operates in HD. In the present disclosure, a symbol/slot operating in FD may mean a symbol/slot for which the UE is semi-statically configured by the base station such that the cell operates in FD. Thereafter, even when the UE is dynamically indicated by the base station that a specific symbol/slot resource operates in HD or FD, the UE may determine a slot for transmitting the UCI in consideration of only semi-statically indicated information.

Hereinafter, downlink (DL) SPS (semi-persistent scheduling) may mean periodically receiving downlink data through a PDSCH in a DL SPS resource semi-statically configured without separate DCI scheduling. The UE may feedback HARQ-ACK information for periodically received DL SPS in a periodically allocated PUCCH resource. However, a case may occur in which HARQ-ACK information for DL SPS received in a specific slot cannot be fed back. For example, assume that, according to DL SPS, the UE is configured to receive downlink data in a PDSCH of slot n and feedback HARQ-ACK (which may be referred to as SPS HARQ-ACK) information for the downlink data through a PUCCH of slot n+k (which may be referred to as SPS PUCCH).

In this case, when a slot for transmitting the SPS HARQ-ACK is a downlink slot semi-statically configured, the UE may delay timing of SPS HARQ-ACK transmission until a slot in which UL transmission can be performed after the downlink slot, and this operation may be referred to as SPS HARQ-ACK delay (or SPS PUCCH delay).

In this case, in the method according to the present disclosure, when a slot determined/configured for transmitting the SPS HARQ-ACK according to the conventional standard specification is a DL slot or an FD slot, the UE may determine the earliest UL-transmittable HD slot thereafter as a slot for transmitting the UCI. That is, when the slot configured for transmitting the SPS HARQ-ACK is a slot semi-statically determined as a DL slot and/or an FD slot, the UE may determine, as a slot for transmitting the HARQ-ACK, the earliest slot thereafter that is capable of transmitting UL and is also an HD slot. In this case, when all symbols in which a PUCCH including HARQ-ACK information is transmitted within the slot are symbols semi-statically determined as UL symbols or symbols semi-statically determined as flexible symbols in which no SS/PBCH block is transmitted, the corresponding slot may be determined as an HD slot capable of transmitting UL.

When the slot for transmitting the SPS HARQ-ACK is delayed, the UE may be configured, by the base station through a higher layer parameter, with a maximum delay value to be applied (the maximum number of delayed slots).

In this case, the UE may consider only HD slots for counting delayed slots. That is, when the maximum delay value configured for the UE is Dₘₐₓ, the UE determines that the transmission slot of the SPS HARQ-ACK may be delayed by up to Dₘₐₓ HD slots.

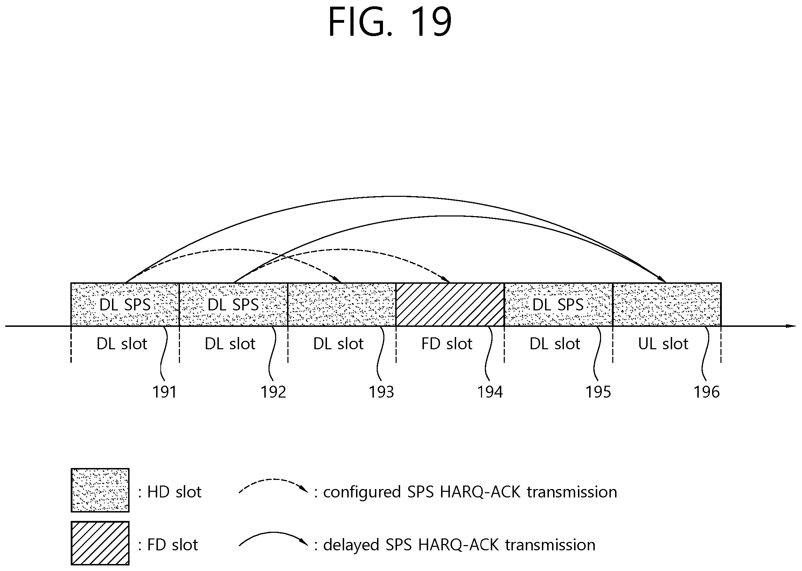

FIG. 19 illustrates an example of a delayed UCI transmission method.

Referring to FIG. 19, the UE receives downlink data through PDSCHs (DL SPS PDSCHs) of downlink slots 191 and 192 according to DL SPS.

Assume that HARQ-ACK information for downlink data of a DL SPS PDSCH received in slot n is semi-statically configured to be transmitted through a PUCCH resource of slot n+2. That is, assume that HARQ-ACK information for downlink data of the DL SPS PDSCH received in slot 191 is configured to be transmitted in slot 193, and HARQ-ACK information for downlink data of the DL SPS PDSCH received in slot 192 is configured to be transmitted in slot 194.

However, slot 193 may be a DL slot, and slot 194 may be an FD slot. In this case, the UE may feedback HARQ-ACK information for downlink data of the DL SPS PDSCH received in slot 191 in slot 196, which is the earliest UL-transmittable HD slot after the DL slot 193.

In addition, the UE may feedback HARQ-ACK information for downlink data of the DL SPS PDSCH received in slot 192 in slot 196, which is the earliest UL-transmittable HD slot after the FD slot 194.

That is, SPS HARQ-ACK information is transmitted with a delay from an originally configured time point. In this case, a maximum value that may be delayed (which may be denoted by Dₘₐₓ) may be configured from a network to the UE. That is, unlimited delay of the SPS HARQ-ACK information is not allowed.

If the maximum value that may be delayed is exceeded, the UE may not transmit the SPS HARQ-ACK information, or may transmit the SPS HARQ-ACK information in another slot (e.g., slot 194). More specific operations will be described later (see Alt a to Alt d applicable when a gap between slot m and slot m' is greater than Gₘₐₓ). In addition, when counting the maximum value of the delay, only HD slots may be considered. In the above example, when the maximum value of the delay is given as 2, slot 194, which is the FD slot, is not counted.

As another example, in the case of an aperiodic CSI report, the UE multiplexes aperiodic CSI information in a PUSCH of a first slot scheduled for transmitting a PUSCH by DCI indicating/requesting the aperiodic CSI report, and transmits the same.

In the case of PUSCH repetition type A, when DCI format 0_1 and DCI format 0_2 indicate codepoint "10" or "11" for an 'SRS resource set indicaotr' and schedule an aperiodic CSI report in a PUSCH having a transport block by a 'CSI request' field of DCI, CSI report multiplexing is determined as follows.

If a higher layer parameter 'AP-CSI-MultiplexingMode' in 'CSI-AssociatedReportConfigInfo' is enabled and UCI other than the CSI report is not multiplexed in the PUSCH, the CSI report is individually transmitted only in the first transmission occasion related with the first SRS resource set and the first transmission occasion related with the second SRS resource set. Otherwise, the CSI report is transmitted only in the first transmission occasion.

In the case of PUSCH transmission of TBoMS, when DCI format 0_1 and DCI format 0_2 schedule an aperiodic CSI report in a PUSCH having a transport block by a 'CSI request' field of DCI, the CSI report is transmitted only in the first slot among N·K slots determined for the PUSCH transmission.

In the case of PUSCH repetition type B, when DCI format 0_1 and DCI format 0_2 indicate code point "10" or "11" for an 'SRS resource set indicator' and schedule an aperiodic CSI report in a PUSCH having a transport block by a 'CSI request' field of DCI, CSI report multiplexing is determined as follows.

If a higher layer parameter 'AP-CSI-MultiplexingMode' in 'CSI-AssociatedReportConfigInfo' is enabled, the number of symbols of a first actual repetition related with the first SRS resource set is the same as the number of symbols of a first actual repetition related with the second SRS resource set, and UCI other than the CSI report is not multiplexed in the PUSCH, the CSI report is separately multiplexed only for the first actual repetition related with the first SRS resource set and the first actual repetition related with the second SRS resource set. Otherwise, the CSI report is multiplexed only in the first actual repetition.

When a slot configured for transmitting the aperiodic CSI information is slot m, slot m may be an FD slot. In this case, the UE may apply the above method and determine the earliest HD slot after slot m as a slot for transmitting the UCI.

Additionally, in the case of an aperiodic CSI report without PUSCH transmission, the UE may report aperiodic CSI information through a slot resource indicated by a TDRA field of DCI indicating the aperiodic CSI report.

When the UE is scheduled, by a 'CSI request' field of DCI, to transmit a PUSCH having no transport block and having a CSI report, a value m of a 'Time domain resource assignment' field of the DCI provides row index m + 1 of a resource allocation table. The indexed row may define a start and length indicator (SLIV), or may directly define a start symbol S and an allocation length L. A PUSCH mapping type and a K₂ value to be applied to the PUSCH transmission may be determined as in the following equation.${K}_{2} = {max}_{j} {Y}_{j} \left(m+1\right)$

Here, Yⱼ, j= 0, ..., N_{Rep}-1 are corresponding list entries of a higher layer parameter. In 'CSI-ReportConfig' for N_{Rep} triggered CSI reporting configurations, the higher layer parameter may be i) 'reportSlotOffsetListDCI-0-2' or 'reportSlotOffsetListDCI-0-2-r17', if the PUSCH is scheduled by DCI format 0_2 (a DCI format used for scheduling of a PUSCH in one cell) and 'reportSlotOffsetListDCI-0-2' or 'reportSlotOffsetListDCI-0-2-r17' is configured, ii) 'reportSlotOffsetListDCI-0-1' or 'reportSlotOffsetListDCI-0-1-r17', if the PUSCH is scheduled by DCI format 0_1 (a DCI format used for scheduling of one or more PUSCHs in one cell) and 'reportSlotOffsetListDCI-0-1' or 'reportSlotOffsetListDCI-0-1-r17' is configured, or iii) 'reportSlotOffsetList' or 'reportSlotOffsetList-r17' otherwise.

Yⱼ(m+1) is an (m+1)-th entry of Yⱼ.

A slot Kₛ in which the UE transmits the PUSCH may be determined based on K₂ according to the following equation.${K}_{s} = \left⌊n⋅\frac{{2}^{{μ}_{PUSCH}}}{{2}^{{μ}_{PDCCH}}}\right⌋ + {K}_{2} + \left⌊\left(\frac{{N}_{slot , offset , PDCCH}^{CA}}{{2}^{{μ}_{offset , PDCCH}}}-\frac{{N}_{slot , offset , PUSCH}^{CA}}{{2}^{{μ}_{offset , PUSCH}}}\right)⋅{2}^{{μ}_{PUSCH}}\right⌋$

If 'ca-SlotOffset' is configured for at least one of a scheduled cell and a scheduling cell, Ks may be determined according to the following equation.${K}_{s} = \left⌊n⋅\frac{{2}^{{μ}_{PUSCH}}}{{2}^{{μ}_{PDCCH}}}\right⌋ + {K}_{2} + {K}_{offset} ⋅ \frac{{2}^{{μ}_{PUSCH}}}{{2}^{{μ}_{{K}_{offset}}}}$

Here, K_{offset} is a parameter configured by a higher layer, and *µ_{K_{offset}}* is a subcarrier spacing configuration for K_{offset}, wherein a value 0 is for frequency range 1, n is a slot having scheduling DCI, K₂ is based on a numerology of the PUSCH, and µ_{PUSCH} and µ_{PDCCH} are a subcarrier spacing configuration for the PUSCH and a subcarrier spacing configuration for the PDCCH, respectively. The scheduling DCI is a DCI format other than DCI format 0_0 for which CRC is scrambled by TC-RNTI.

'N^{CA}_{slot,offset,PDCCH}' and 'µ_{offset,PDCCH}' are N^{CA}_{slot,offset} and µ_{offset}, respectively. These may be determined by 'ca-SlotOffset' configured by a higher layer for a cell receiving the PDCCH. 'N^{CA}_{slot,offset,PUSCH}' and 'µ_{offset,PUSCH}' are N^{CA}_{slot,offset} and µ_{offset}, respectively. These may be determined by 'ca-SlotOffset' configured by a higher layer for a cell transmitting the PUSCH.

For a PUSCH scheduled by DCI format 0_1, if 'pusch-RepTypeIndicatorDCI-0-1' is configured as 'pusch-RepTypeB', the UE applies a PUSCH repetition type B procedure when determining time domain resource assignment. For a PUSCH scheduled by DCI format 0_2, if 'pusch-RepTypeIndicatorDCI-0-2' is configured as 'pusch-RepTypeB', the UE applies the PUSCH repetition type B procedure when determining time domain resource assignment. Otherwise, the UE applies a PUSCH repetition type A procedure when determining time domain resource assignment for a PUSCH scheduled by a PDCCH, an RAR UL grant, or a fallback RAR UL grant.

For a PUSCH scheduled by DCI format 0_1 or DCI format 0_2, if 'numberOfSlotsTBoMS' is present and greater than 1, the UE may apply a TBoMS procedure when determining time domain resource assignment.

For PUSCH repetition type A and TBoMS, a start symbol S based on a start of a slot and L, which is the number of consecutive symbols counted from symbol S allocated for the PUSCH, may be determined from an SLIV that is a start and length indicator of an indexed row.

For example, if (L-1)≤7, SLIV=14·(L-1)+S. Otherwise, SLIV=14·(14-L-1)+(14-1-S), and 0<L≤14-S.

For PUSCH repetition type B, a start symbol S based on a start of a slot and L, which is the number of consecutive symbols calculated from symbol S allocated for the PUSCH, may be provided by 'startSymbol' and 'length' of an indexed row of a resource allocation table, respectively.

For PUSCH repetition type A and TBoMS, a PUSCH mapping type is configured as type A or type B by an indexed row.

For PUSCH repetition type B, a PUSCH mapping type is configured as type B.

When slot m is a slot configured for transmitting aperiodic CSI information according to such a conventional standard specification, slot m may be an FD slot. In this case, the UE may apply the method according to the present disclosure, and may determine the earliest HD slot after slot m as a slot for transmitting the UCI.

Additionally, when the UE is configured, according to the existing standard specification, to transmit the UCI in slot m, but determines slot m' (m < m'), which is an HD slot, as a slot for transmitting the UCI because the corresponding slot is an FD slot, a gap between slot m and slot m' may be limited not to be greater than Gₘₐₓ.

That is, in the present disclosure, a value of m'-m may be limited not to be greater than Gₘₐₓ. If the gap between slot m and slot m' is greater than Gₘₐₓ, the UE may determine a slot for transmitting the UCI as follows.

Alt a. The UE determines slot m+Gₘₐₓ as a slot for transmitting the UCI.

Alt b. The UE determines, as a slot for transmitting the UCI, a slot that is located before slot m+Gₘₐₓ, can be used by the UE for PUCCH or PUSCH transmission, and is closest to slot m+Gₘₐₓ.

Alt c. The UE determines slot m as a slot for transmitting the UCI.

Alt d. The UE does not perform the corresponding UCI transmission.

In this case, a value of Gₘₐₓ may be fixed to a specific value and defined in a standard specification. Alternatively, a value of Gₘₐₓ may be a value indicated to the UE by the network through RRC, MAC-CE, and/or DCI signaling.

For an aperiodic CSI report with PUSCH transmission indicated together with PUSCH transmission through a UL grant, slot m' may be the same as a last slot in which a scheduled PUSCH is transmitted.

That is, when the number of slots in which a PUSCH (which may also include TBoMS) is transmitted is N*K, a value of Gₘₐₓ may be equal to N*K-1. In this case, K may mean the number of repetitions of the PUSCH, and a value of N may mean the number of slots constituting one TBoMS transmission (for general PUSCH transmission other than TBoMS, N=1).

### Method 2. Method of determining a UCI transmission slot by counting only HD slots

Method 2 may be a method of counting only HD slots in counting the number of slots when the UCI is transmitted after the number of slots from a specific slot.

As a specific example, when the UE receives a PDSCH for which reception ends in slot n, the UE may be configured to transmit HARQ-ACK information for the PDSCH in slot n+k. In this case, k is the number of slots, and may be indicated by a 'PDSCH-to-HARQ feedback timing indicator (PDSCH-to-HARQ_feedback timing indicator)' field (if present) of a DCI format, or may be provided by 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'd1-DataToUL-ACK-v1700' included in a higher layer message (for example, 'PUCCH-Config' used to configure UE-specific PUCCH parameters).

According to the present disclosure, when the UE receives a PDSCH for which reception ends in slot n, the UE determines a k-th HD slot after slot n as a slot for transmitting the UCI, and transmits the UCI in the corresponding slot. That is, when a position of the k-th HD slot after slot n is slot n+k' (k <= k'), the UE determines slot n+k' as a slot for transmitting the UCI and transmits the UCI.

Hereinafter, an HD slot and an FD slot may more specifically mean the following.

An HD slot may mean a slot in which all symbols within the slot operate in HD.

An FD slot may mean a slot in which all symbols within the slot operate in FD. Alternatively, the FD slot may mean a slot in which at least one symbol within the slot operates in FD.

Alternatively, an HD slot may mean, when the UE receives a specific DL signal/channel in the corresponding slot, a slot in which all symbols in which the corresponding DL signal/channel is transmitted are symbols operating in HD, and, when the UE receives a specific UL signal/channel in the corresponding slot, a slot in which all symbols in which the corresponding UL signal/channel is transmitted are symbols operating in HD.

An FD slot may mean, when the UE receives a specific DL signal/channel in the corresponding slot, a slot in which all symbols in which the corresponding DL signal/channel is transmitted are symbols operating in FD, and, when the UE receives a specific UL signal/channel in the corresponding slot, a slot in which all symbols in which the corresponding UL signal/channel is transmitted are symbols operating in FD.

Alternatively, the FD slot may mean, when the UE receives a specific DL signal/channel in the corresponding slot, a slot in which at least one symbol among symbols in which the corresponding DL signal/channel is transmitted is a symbol operating in FD, and, when the UE receives a specific UL signal/channel in the corresponding slot, a slot in which at least one symbol among symbols in which the corresponding UL signal/channel is transmitted is a symbol operating in FD.

Alternatively, a symbol/slot operating in HD may mean a symbol/slot for which the UE is semi-statically configured by the base station such that a cell operates in HD. In the present disclosure, a symbol/slot operating in FD may mean a symbol/slot for which the UE is semi-statically configured by the base station such that the cell operates in FD. Thereafter, even when the UE is dynamically indicated by the base station that a specific symbol/slot resource operates in HD or FD, the UE may determine a slot for transmitting the UCI in consideration of only semi-statically indicated information.

Additionally, according to the conventional standard specification, the UE should transmit the UCI in slot m, but when the UE determines slot m' (m < m'), which is an HD slot, as a slot for transmitting the UCI according to the method of the present disclosure because the corresponding slot is an FD slot, a gap between slot m and slot m' may be limited not to be greater than Gₘₐₓ.

That is, the present disclosure proposes that a value of m'-m is not greater than Gₘₐₓ. If the gap between slot m and slot m' is greater than Gₘₐₓ, the UE may determine a slot for transmitting the UCI as follows.

Alt a. The UE determines slot m+Gₘₐₓ as a slot for transmitting the UCI.

Alt b. The UE determines, as a slot for transmitting the UCI, a slot that is located before slot m+Gmax, can be used by the UE for PUCCH or PUSCH transmission, and is closest to slot m+Gₘₐₓ.

Alt c. The UE determines slot m as a slot for transmitting the UCI.

Alt d. The UE does not perform the corresponding UCI transmission.

Alternatively, when the UE receives a PDSCH for which reception ends in slot n and determines to transmit HARQ-ACK information for the corresponding PDSCH in slot n+k', a gap between slot n and slot n+k' (that is, a value of k') may be limited not to be greater than Gₘₐₓ. That is, the present disclosure proposes that a value of k' is not greater than Gₘₐₓ. If a gap of a value of k' is greater than Gₘₐₓ, the UE may determine a slot for transmitting the UCI as follows.

Alt a. The UE determines slot n+Gₘₐₓ as a slot for transmitting the UCI.

Alt b. The UE determines, as a slot for transmitting the UCI, a slot that is located before slot n+Gₘₐₓ, can be used by the UE for PUCCH or PUSCH transmission, and is closest to slot n+Gₘₐₓ.

Alt c. The UE determines slot n+k as a slot for transmitting the UCI.

Alt d. The UE does not perform the corresponding UCI transmission.

A value of Gₘₐₓ may be fixed to a specific value and defined in a standard specification. Alternatively, a value of Gₘₐₓ may be a value indicated to the UE by the network through RRC, MAC-CE, and/or DCI signaling.

Such a method may be applied only to transmission of HARQ-ACK information.

The proposed methods including the above-described Method 1 and Method 2 may be applied when all or some of the following conditions are satisfied.
i) The UE may apply the above proposal only when whether to apply the corresponding operation is indicated by the network through RRC, MAC-CE, DCI signaling, and the like.
ii) The UE may differently apply the proposed method according to transmitted UCI information.

For example, in the case of HARQ-ACK and/or SR information, the UE may transmit according to an existing method, and may apply the above proposal and transmit only in the case of other information. This is because, in the case of HARQ-ACK information, low latency may be relatively important.

Alternatively, for example, a value of Gₘₐₓ applied to the method may be differently configured/applied according to a type of transmitted UCI. This is because a required delay may be different according to UCI information.

Alternatively, for example, in the case of HARQ-ACK information, the UE may apply Method 2, and in the case of the remaining information, the UE may apply Method 1 and transmit.

iii) The UE may apply the method according to the present disclosure only when transmitting the UCI by multiplexing the UCI through a PUSCH. That is, only when the UE transmits the UCI by applying the existing standard specification and by multiplexing the UCI in the PUSCH, the UE may apply the method according to the present disclosure.

The base station requests UCI information such as HARQ-ACK, CSI, and SR from the UE and receives such UCI information through a PUCCH or a PUSCH. In order for the base station to receive the UCI in an HD slot as much as possible, the base station may determine a slot resource in which the UCI is received by applying the above method.

To this end, the base station determines/configures a resource in which a cell operates in FD and a resource in which the cell operates in HD, and signals information about a position and/or an amount of the corresponding resource to the UE.

Thereafter, the base station requests transmission of the UCI from the UE.

Thereafter, the base station determines a slot resource for receiving the UCI based on a slot in which the cell operates in FD and a slot in which the cell operates in HD.

In the corresponding resource, the base station receives the UCI and obtains information such as HARQ-ACK, CSI, and SR.

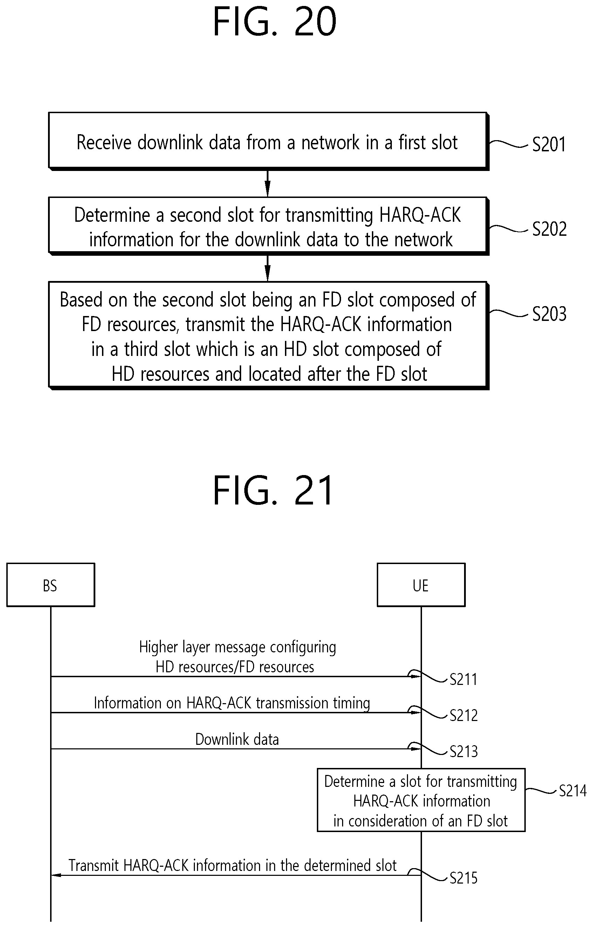

FIG. 20 illustrates an operation of a UE according to the present disclosure.

Referring to FIG. 20, the UE receives downlink data from a network in a first slot (S201). For example, the UE may receive downlink data (a transport block) through a PDSCH of the first slot.

The UE determines a second slot for transmitting HARQ-ACK (hybrid automatic repeat request-acknowledgement) information for the downlink data to the network (S202).

For example, in the case of SPS PDSCH reception ending in slot n_{D}, which is a downlink slot, the UE may determine that the UE will transmit HARQ-ACK information for the SPS PDSCH through a PUCCH of slot n+k, which is an uplink slot (or is configured to transmit the same). In this case, k is provided by a 'PDSCH-to-HARQ feedback timing indicator (PDSCH-to-HARQ_feedback timing indicator)' field (if present) of a DCI format activating the SPS PDSCH reception.

If the UE receives a DCI format activating SPS PDSCH reception ending in slot n_{D}, which is a downlink slot, or scheduling PDSCH reception, and the DCI format does not include a 'PDSCH-to-HARQ feedback timing indicator (PDSCH-to-HARQ_feedback timing indicator)', the UE may determine that the UE will transmit HARQ-ACK information in PUCCH transmission of uplink slot n+k (or is configured to transmit the same). In this case, k is provided by a higher layer parameter 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'.

If the UE receives a DCI format scheduling PDSCH receptions ending in slot n_{D}, which is a downlink slot, or detects a DCI format generating HARQ-ACK information bits but not scheduling PDSCH reception through PDCCH reception ending in downlink slot n_{D}, the UE determines that the UE will transmit the corresponding HARQ-ACK information in PUCCH transmission of slot n+k, which is an uplink slot (or is configured to transmit the same). Here, k is the number of slots, and is indicated by a 'PDSCH-to-HARQ feedback timing indicator (PDSCH-to-HARQ_feedback timing indicator)' field (if present) of the DCI format, or is provided by a higher layer parameter 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'.

As an example, at least one value may be provided by a higher layer parameter (e.g., 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'), and one of the at least one value may be indicated according to a value of a 'PDSCH-to-HARQ feedback timing indicator (PDSCH-to-HARQ_feedback timing indicator)' field of a DCI format. For example, when the 'PDSCH-to-HARQ feedback timing indicator (PDSCH-to-HARQ_feedback timing indicator)' field is 1 bit, if a value of the 1 bit is 0, the first value among values provided by the higher layer parameter may be indicated, and if the value of the 1 bit is 1, the second value among the values provided by the higher layer parameter may be indicated. As another example, when the 'PDSCH-to-HARQ feedback timing indicator (PDSCH-to-HARQ_feedback timing indicator)' field is 2 bits, if a value of the 2 bits is '00', '01', '10', or '11', the first, second, third, or fourth value among values provided by the higher layer parameter may be indicated, respectively. As still another example, when the 'PDSCH-to-HARQ feedback timing indicator (PDSCH-to-HARQ_feedback timing indicator)' field is 3 bits, if a value of the 3 bits is '000', '001', '010', '011', '100', '101', '110', or '111', the first, second, third, fourth, fifth, sixth, seventh, or eighth value among values provided by the higher layer parameter may be indicated, respectively.

When the second slot is an FD slot composed of FD (full duplex) resources, the UE transmits the HARQ-ACK information in a third slot, which is an HD slot composed of HD (half duplex) resources and located after the FD slot (S203).

The HD slot may be one of a downlink (DL) slot, a flexible slot, or an uplink (UL) slot, and the third slot may be an uplink (UL) slot.

Here, the DL slot may be a slot in which all symbols within the slot are composed of DL symbols, but when the UE intends to perform a specific operation (e.g., reception of a DL signal or transmission of a UL signal) in the corresponding slot, the DL slot may mean a slot in which all symbols for performing the specific operation are composed of DL symbols.

The UL slot may be a slot in which all symbols within the slot are composed of UL symbols, but when the UE intends to perform a specific operation (e.g., transmission of a UL signal or reception of a DL signal) in the corresponding slot, the UL slot may mean a slot in which all symbols for performing the specific operation are composed of UL symbols.

The flexible slot may be a slot in which all symbols within the slot are composed of flexible symbols, but when the UE intends to perform a specific operation (e.g., transmission of a UL signal or reception of a DL signal) in the corresponding slot, the flexible slot may mean a slot in which all symbols (or at least one symbol) for performing the specific operation are composed of flexible symbols.

If the second slot is an HD slot, when the HD slot is a downlink (DL) slot, the UE may transmit the HARQ-ACK information in the third slot, and when the HD slot is an uplink slot, the UE may transmit the HARQ-ACK information in the second slot.

For convenience, when the first slot is slot n and the second slot is slot n+k, a value of k may be informed by a specific field (e.g., the above-described 'PDSCH-to-HARQ feedback timing indicator (PDSCH-to-HARQ_feedback timing indicator)' field) of downlink control information (DCI) scheduling a physical downlink shared channel (physical downlink shared channel: PDSCH) for which reception ends in slot n.

Alternatively, when the first slot is slot n and the second slot is slot n+k, a value of k may be provided by a higher layer parameter (e.g., 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700'). This may be applied when the DCI scheduling the PDSCH for which reception ends in slot n does not have the specific field.

Alternatively, when the first slot is slot n and the second slot is slot n+k, a value of k may be a value indicated by a specific field ('PDSCH-to-HARQ feedback timing indicator (PDSCH-to-HARQ_feedback timing indicator)' field) of the DCI among a plurality of values provided by a higher layer parameter (e.g., 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700').

According to an embodiment, the UE may further receive information informing a maximum value of a gap between the second slot and the third slot.

In this case, the maximum value of the gap may be related with the number of HD slots after the second slot. For example, whether the maximum value is exceeded may be determined by counting only HD slots located after the second slot without counting FD slots located after the second slot.

According to an embodiment, the UE may further receive information informing a maximum value of a gap between the first slot and the third slot.

According to an embodiment, the UE determines a fourth slot for transmitting uplink control information (UCI), and when the fourth slot is an FD slot composed of FD (full duplex) resources, the UE may transmit the UCI in a fifth slot, which is an HD slot composed of HD (half duplex) resources and located after the FD slot.

A maximum value of a gap between the fourth slot and the fifth slot may be differently applied according to a type of the UCI.

The method of FIG. 20 may be an example to which Method 1 and/or Method 2 described above is applied.

According to the method of FIG. 20, in a wireless communication system including a UE supporting both FD operation and HD operation, it is possible to prevent the UCI from being transmitted through FD resources in which a channel state may be poorer than a channel state targeted by a base station. Accordingly, even in a wireless communication system supporting FD operation, the UCI can be reliably transmitted.

In addition, when resources of different types (FD resources and HD resources) coexist, it is possible to clearly define through which resource the UCI is transmitted, thereby preventing ambiguity from occurring between transmitting and receiving entities.

FIG. 21 illustrates a signaling procedure and an operation method between a base station and a UE.

Referring to FIG. 21, the base station transmits, to the UE, a higher layer message configuring an HD resource/FD resource (S211). The higher layer message configuring the HD resource/FD resource may be included together in one information element, or a higher layer message configuring an HD resource and a higher layer message configuring an FD resource may be separately included in separate information elements.

According to an embodiment, the HD resource may be configured cell-specifically, and the FD resource may be configured UE-specifically. Alternatively, both the HD resource and the FD resource may be configured cell-specifically. The HD resource and the FD resource may be configured semi-persistently (semi-statically). Alternatively, the HD resource may be configured semi-statically, and the FD resource may be configured dynamically.

The base station provides, to the UE, information on HARQ-ACK transmission timing (S212). For example, the base station may provide information informing a slot for transmitting HARQ-ACK information through a specific field (e.g., the above-described 'PDSCH-to-HARQ feedback timing indicator (PDSCH-to-HARQ_feedback timing indicator)' field) of DCI scheduling a PDSCH. And/or the base station may provide, through a higher layer message, information related with timing between PDSCH reception and transmission of HARQ-ACK information (e.g., 'dl-DataToUL-ACK', 'dl-DataToUL-ACK-r16', 'dl-DataToUL-ACK-DCI-1-2', 'dl-DataToUL-ACK-r17', 'dl-DataToUL-ACK-DCI-1-2-r17', or 'dl-DataToUL-ACK-v1700').

The base station transmits downlink data to the UE (S213). The base station may transmit the downlink data through a PDSCH (or SPS PDSCH).

The UE determines a slot for transmitting HARQ-ACK information in consideration of an FD slot (S214). The UE may first determine, according to an existing standard specification, slot n+k for transmitting HARQ-ACK information for PDSCH reception ending in slot n. Thereafter, in consideration of whether slot n+k is an FD slot, the UE determines a slot for actually transmitting the HARQ-ACK information. For example, when slot n+k is an FD slot composed of FD resources, the UE transmits the HARQ-ACK information in slot n+k' (where k<k'), which is an HD slot composed of HD resources and located after the FD slot (more specifically, a UL slot).

In FIG. 20 and FIG. 21, downlink data reception through a PDSCH and transmission of HARQ-ACK information for the downlink data have been described, but this may be extended to UCI transmission. For example, assume that the UCI is aperiodic CSI (aperiodic channel state information). A specific field of DCI indicating a report of the aperiodic CSI (an aperiodic CSI report) may indicate a resource for performing the aperiodic CSI report. In this case, when the resource for performing the aperiodic CSI report is determined as an FD slot, the UE performs the aperiodic CSI report in the earliest HD slot after the FD slot (more specifically, a UL slot).

In addition, when the UE should transmit the UCI in slot m according to the existing standard specification, a gap between slot m and slot m' may be limited not to be greater than a maximum value (Gₘₐₓ) when the UE transmits the UCI in slot m' (m < m'), which is an HD slot, according to the method of the present disclosure because slot m is an FD slot. The maximum value may be configured from the network to the UE or may be predetermined in a standard specification according to a type of the UCI.

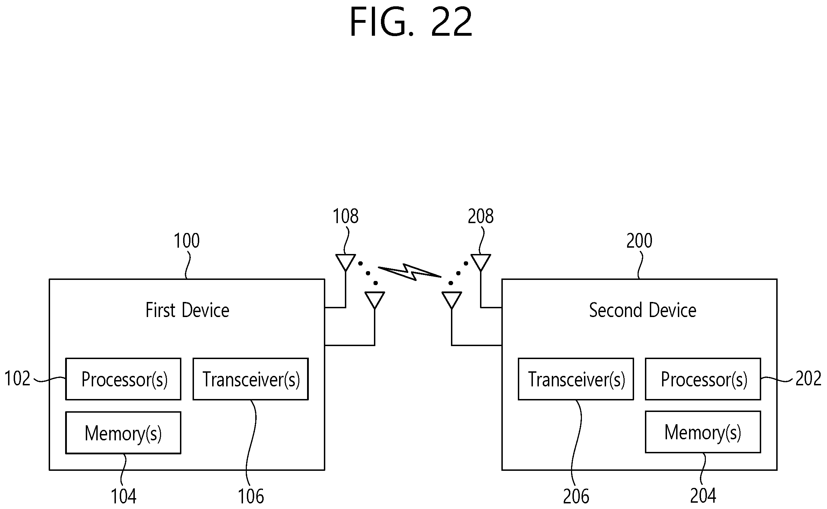

FIG. 22 illustrates a wireless device applicable to the present specification.

Referring to FIG. 22, a first wireless device 100 and a second wireless device 200 may transmit and receive radio signals through a variety of RATs (e.g., LTE and NR).

The first wireless device 100 may include at least one processor 102 and at least one memory 104 and additionally further include at least one transceiver 106 and/or at least one antenna 108. At least one processor 102 (hereinafter simply referred to as a processor) controls at least one memory 104 (hereinafter simply referred to as a memory) and/or at least one transceiver 106 (hereinafter simply referred to as a transceiver), and may be configured to implement the descriptions, functions, procedures, proposals, methods and/or operational flowcharts disclosed in this document. For example, the processors 102 may process information within the memory 104 to generate first information/signals and then transmit radio signals including the first information/signals through the transceivers 106. In addition, the processor 102 may receive radio signals including second information/signals through the transceiver 106 and then store information obtained by processing the second information/signals in the memory 104. The memory 104 may be connected to the processor 102 and may store a variety of information related to operations of the processor 102. For example, the memory 104 may store software code including commands for performing a part or the entirety of processes controlled by the processor 102 or for performing the descriptions, functions, procedures, proposals, methods, and/or operational flowcharts disclosed in this document. Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. The transceiver 106 may include a transmitter and/or a receiver. The transceiver 106 may be interchangeably used with a radio frequency (RF) unit. In the present specification, the wireless device may represent a communication modem/circuit/chip.

The processor (102) receives downlink data from a network in a first slot, and determines a second slot for transmitting HARQ-ACK (hybrid automatic repeat request-acknowledgement) information for the downlink data to the network. When the second slot is an FD slot composed of FD (full duplex) resources, the UE transmits the HARQ-ACK information in a third slot which is an HD slot composed of HD (half duplex) resources and located after the FD slot. The specific operation has been described with reference to FIGS. 18 to 21.

The second wireless device 200 may include at least one processor 202 and at least one memory 204 and additionally further include at least one transceiver 206 and/or at least one antenna 208. The processor 202 may control the memory 204 and/or the transceiver 206 and may be configured to implement the descriptions, functions, procedures, proposals, methods, and/or operational flowcharts disclosed in this document. For example, the processor 202 may process information within the memory 204 to generate third information/signals and then transmit radio signals including the third information/signals through the transceiver 206. In addition, the processor 202 may receive radio signals including fourth information/signals through the transceiver 206 and then store information obtained by processing the fourth information/signals in the memory 204. The memory 204 may be connected to the processor 202 and may store a variety of information related to operations of the processor 202. For example, the memory 204 may store software code including commands for performing a part or the entirety of processes controlled by the processor 202 or for performing the descriptions, functions, procedures, proposals, methods, and/or operational flowcharts disclosed in this document. Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. The transceiver 206 may include a transmitter and/or a receiver. The transceiver 206 may be interchangeably used with an RF unit. In the present specification, the wireless device may represent a communication modem/circuit/chip.

The processor (202) transmits downlink data to a UE in a first slot, and determines a second slot in which HARQ-ACK (hybrid automatic repeat request-acknowledgement) information for the downlink data is to be received from the UE. When the second slot is an FD slot composed of FD (full duplex) resources, the base station receives the HARQ-ACK information in a third slot which is an HD slot composed of HD (half duplex) resources and located after the FD slot. The specific operation has been described with reference to FIGS. 18 to 21.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The one or more processors 102 and 202 may be implemented with at least one computer readable medium (CRM) including instructions to be executed by at least one processor.

That is, at least one computer readable medium (CRM) including instructions executed based on execution by at least one processor receives downlink data from a network in a first slot, and determines a second slot for transmitting HARQ-ACK information for the downlink data to the network. When the second slot is an FD slot composed of FD resources, the UE transmits the HARQ-ACK information in a third slot which is an HD slot composed of HD resources and located after the FD slot. The specific operation has been described with reference to FIGS. 18 to 21.

The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. In addition, the one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. In addition, the one or more processors 102 and 202 may perform control so that the one or more transceivers 106 and 206 may receive user data, control information, or radio signals from one or more other devices. In addition, the one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

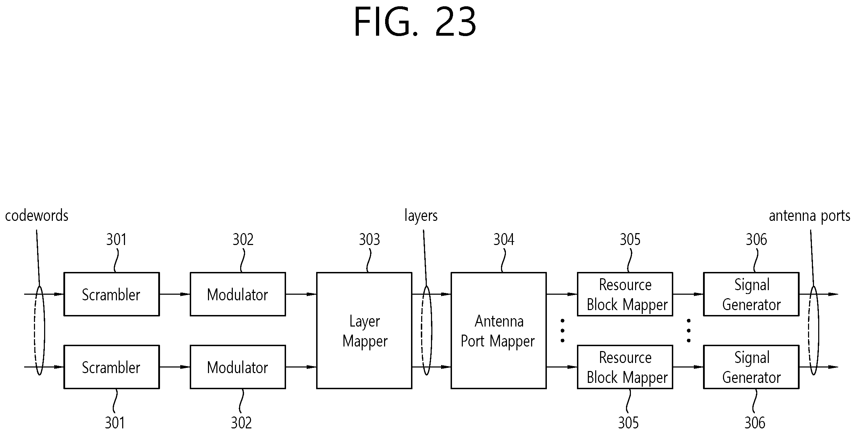

FIG. 23 shows an example of a structure of a signal processing module. Herein, signal processing may be performed in the processors 102 and 202 of FIG. 22.

Referring to FIG. 23, the transmitting device (e.g., a processor, the processor and a memory, or the processor and a transceiver) in a UE or BS may include a scrambler 301, a modulator 302, a layer mapper 303, an antenna port mapper 304, a resource block mapper 305, and a signal generator 306.

The transmitting device can transmit one or more codewords. Coded bits in each codeword are scrambled by the corresponding scrambler 301 and transmitted over a physical channel. A codeword may be referred to as a data string and may be equivalent to a transport block which is a data block provided by the MAC layer.

Scrambled bits are modulated into complex-valued modulation symbols by the corresponding modulator 302. The modulator 302 can modulate the scrambled bits according to a modulation scheme to arrange complex-valued modulation symbols representing positions on a signal constellation. The modulation scheme is not limited and m-PSK (m-Phase Shift Keying) or m-QAM (m-Quadrature Amplitude Modulation) may be used to modulate the coded data. The modulator may be referred to as a modulation mapper.

The complex-valued modulation symbols can be mapped to one or more transport layers by the layer mapper 303. Complex-valued modulation symbols on each layer can be mapped by the antenna port mapper 304 for transmission on an antenna port.

Each resource block mapper 305 can map complex-valued modulation symbols with respect to each antenna port to appropriate resource elements in a virtual resource block allocated for transmission. The resource block mapper can map the virtual resource block to a physical resource block according to an appropriate mapping scheme. The resource block mapper 305 can allocate complex-valued modulation symbols with respect to each antenna port to appropriate subcarriers and multiplex the complex-valued modulation symbols according to a user.

Signal generator 306 can modulate complex-valued modulation symbols with respect to each antenna port, that is, antenna-specific symbols, according to a specific modulation scheme, for example, OFDM (Orthogonal Frequency Division Multiplexing), to generate a complex-valued time domain OFDM symbol signal. The signal generator can perform IFFT (Inverse Fast Fourier Transform) on the antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator may include an IFFT module, a CP inserting unit, a digital-to-analog converter (DAC) and a frequency upconverter.

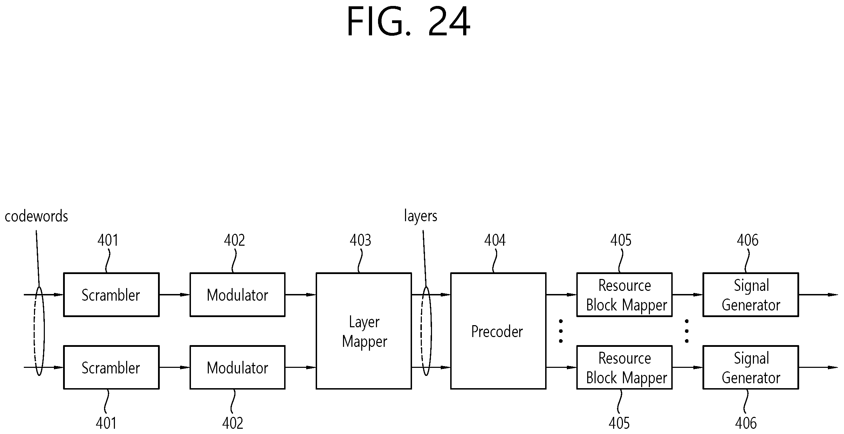

FIG. 24 shows another example of a structure of a signal processing module in a transmitting device. Herein, signal processing may be performed in a processor of a UE/BS, such as the processors 102 and 202 of FIG. 22.

Referring to FIG. 24, the transmitting device (e.g., a processor, the processor and a memory, or the processor and a transceiver) in the UE or the BS may include a scrambler 401, a modulator 402, a layer mapper 403, a precoder 404, a resource block mapper 405, and a signal generator 406.

The transmitting device can scramble coded bits in a codeword by the corresponding scrambler 401 and then transmit the scrambled coded bits through a physical channel.

Scrambled bits are modulated into complex-valued modulation symbols by the corresponding modulator 402. The modulator can modulate the scrambled bits according to a predetermined modulation scheme to arrange complex-valued modulation symbols representing positions on a signal constellation. The modulation scheme is not limited and pi/2-BPSK (pi/2-Binary Phase Shift Keying), m-PSK (m-Phase Shift Keying) or m-QAM (m-Quadrature Amplitude Modulation) may be used to modulate the coded data.

The complex-valued modulation symbols can be mapped to one or more transport layers by the layer mapper 403.

Complex-valued modulation symbols on each layer can be precoded by the precoder 404 for transmission on an antenna port. Here, the precoder may perform transform precoding on the complex-valued modulation symbols and then perform precoding. Alternatively, the precoder may perform precoding without performing transform precoding. The precoder 404 can process the complex-valued modulation symbols according to MIMO using multiple transmission antennas to output antenna-specific symbols and distribute the antenna-specific symbols to the corresponding resource block mapper 405. An output z of the precoder 404 can be obtained by multiplying an output y of the layer mapper 403 by an N x M precoding matrix W. Here, N is the number of antenna ports and M is the number of layers.

Each resource block mapper 405 maps complex-valued modulation symbols with respect to each antenna port to appropriate resource elements in a virtual resource block allocated for transmission.

The resource block mapper 405 can allocate complex-valued modulation symbols to appropriate subcarriers and multiplex the complex-valued modulation symbols according to a user.

Signal generator 406 can modulate complex-valued modulation symbols according to a specific modulation scheme, for example, OFDM, to generate a complex-valued time domain OFDM symbol signal. The signal generator 406 can perform IFFT (Inverse Fast Fourier Transform) on antenna-specific symbols, and a CP (cyclic Prefix) can be inserted into time domain symbols on which IFFT has been performed. OFDM symbols are subjected to digital-analog conversion and frequency up-conversion and then transmitted to the receiving device through each transmission antenna. The signal generator 406 may include an IFFT module, a CP inserting unit, a digital-to-analog converter (DAC) and a frequency upconverter.

The signal processing procedure of the receiving device may be reverse to the signal processing procedure of the transmitting device. Specifically, the processor of the transmitting device decodes and demodulates RF signals received through antenna ports of the transceiver. The receiving device may include a plurality of reception antennas, and signals received through the reception antennas are restored to baseband signals, and then multiplexed and demodulated according to MIMO to be restored to a data string intended to be transmitted by the transmitting device. The receiving device may include a signal restoration unit that restores received signals to baseband signals, a multiplexer for combining and multiplexing received signals, and a channel demodulator for demodulating multiplexed signal strings into corresponding codewords. The signal restoration unit, the multiplexer and the channel demodulator may be configured as an integrated module or independent modules for executing functions thereof. More specifically, the signal restoration unit may include an analog-to-digital converter (ADC) for converting an analog signal into a digital signal, a CP removal unit that removes a CP from the digital signal, an FET module for applying FFT (fast Fourier transform) to the signal from which the CP has been removed to output frequency domain symbols, and a resource element demapper/equalizer for restoring the frequency domain symbols to antenna-specific symbols. The antenna-specific symbols are restored to transport layers by the multiplexer and the transport layers are restored by the channel demodulator to codewords intended to be transmitted by the transmitting device.

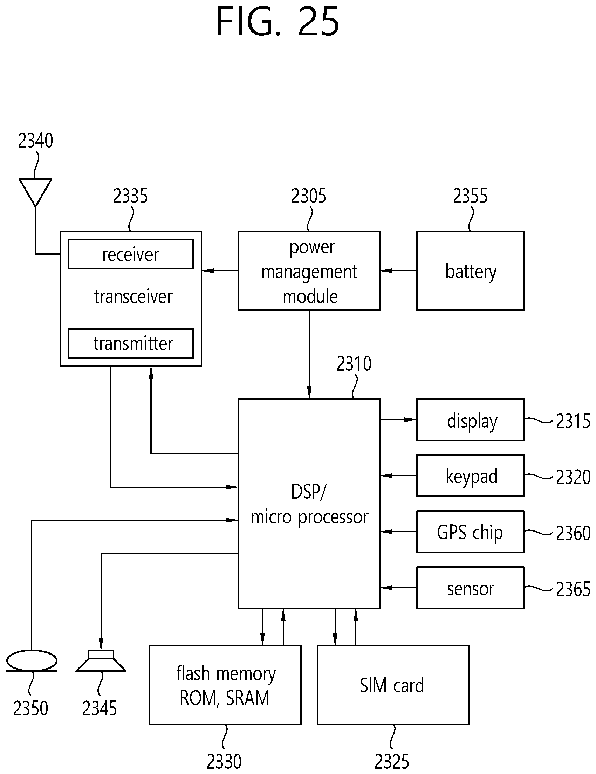

FIG. 25 illustrates an example of a wireless communication device according to an implementation example of the present disclosure.

Referring to FIG. 25, the wireless communication device, for example, a UE may include at least one of a processor 2310 such as a digital signal processor (DSP) or a microprocessor, a transceiver 2335, a power management module 2305, an antenna 2340, a battery 2355, a display 2315, a keypad 2320, a global positioning system (GPS) chip 2360, a sensor 2365, a memory 2330, a subscriber identification module (SIM) card 2325, a speaker 2345 and a microphone 2350. A plurality of antennas and a plurality of processors may be provided.

The processor 2310 can implement functions, procedures and methods described in the present description. The processor 2310 in FIG. 25 may be the processors 102 and 202 in FIG. 22.

The memory 2330 is connected to the processor 2310 and stores information related to operations of the processor. The memory may be located inside or outside the processor and connected to the processor through various techniques such as wired connection and wireless connection. The memory 2330 in FIG. 25 may be the memories 104 and 204 in FIG. 22.

A user can input various types of information such as telephone numbers using various techniques such as pressing buttons of the keypad 2320 or activating sound using the microphone 2350. The processor 2310 can receive and process user information and execute an appropriate function such as calling using an input telephone number. In some scenarios, data can be retrieved from the SIM card 2325 or the memory 2330 to execute appropriate functions. In some scenarios, the processor 2310 can display various types of information and data on the display 2315 for user convenience.

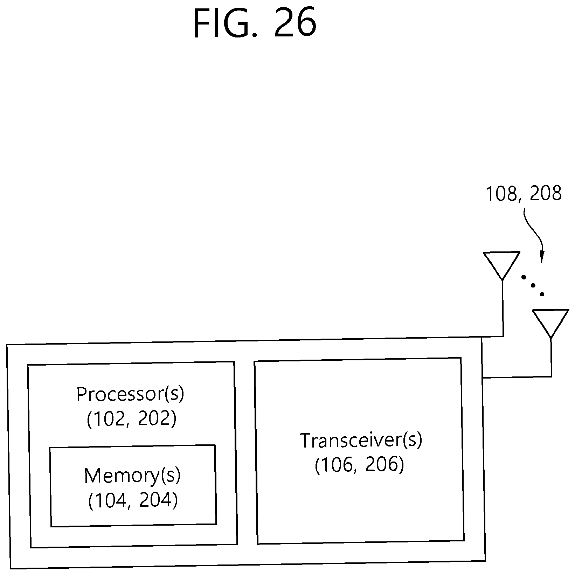

The transceiver 2335 is connected to the processor 2310 and transmit and/or receive RF signals. The processor can control the transceiver in order to start communication or to transmit RF signals including various types of information or data such as voice communication data. The transceiver includes a transmitter and a receiver for transmitting and receiving RF signals. The antenna 2340 can facilitate transmission and reception of RF signals. In some implementation examples, when the transceiver receives an RF signal, the transceiver can forward and convert the signal into a baseband frequency for processing performed by the processor. The signal can be processed through various techniques such as converting into audible or readable information to be output through the speaker 2345. The transceiver in FIG. 25 may be the transceivers 106 and 206 in FIG. 26.

Although not shown in FIG. 25, various components such as a camera and a universal serial bus (USB) port may be additionally included in the UE. For example, the camera may be connected to the processor 2310.

FIG. 25 is an example of implementation with respect to the UE and implementation examples of the present disclosure are not limited thereto. The UE need not essentially include all the components shown in FIG. 25. That is, some of the components, for example, the keypad 2320, the GPS chip 2360, the sensor 2365 and the SIM card 2325 may not be essential components. In this case, they may not be included in the UE.

FIG. 26 shows another example of a wireless device.

Referring to FIG. 26, the wireless device may include at least one processor 102 and 202, at least one memory 104 and 204, at least one transceiver 106 and 206 and one or more antennas 108 and 208.

The example of the wireless device described in FIG. 26 is different from the example of the wireless device described in FIG. 22 in that the processors 102 and 202 and the memories 104 and 204 are separated in FIG. 22 whereas the memories 104 and 204 are included in the processors 102 and 202 in the example of FIG. 26. That is, the processor and the memory may constitute one chipset.

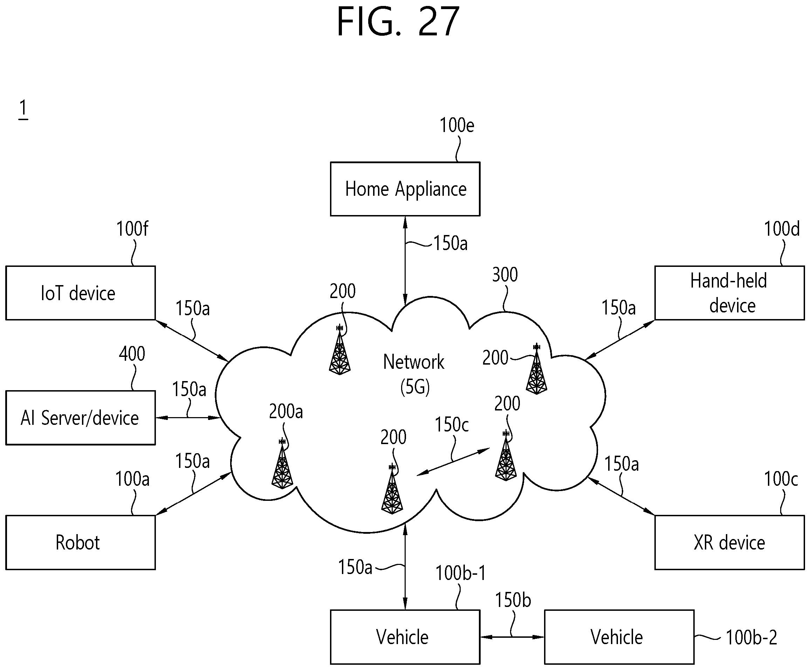

FIG. 27 illustrates a communication system 1 applied to the present specification.

Referring to FIG. 27, a communication system 1 applied to the present specification includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. Vehicle-to-Vehicle (V2V)/Vehicle-to-everything (V2X) communication). In addition, the IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication(e.g. relay, Integrated Access Backhaul(IAB)). The wireless devices and the BSs/the wireless devices may transmit/receive radio signals to/from each other through the wireless communication/connections 150a, 150b or 150c. For example, the wireless communication/connections 150a, 150b or 150c may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

Meanwhile, the NR supports multiple numerologies (or subcarrier spacing (SCS)) for supporting diverse 5G services. For example, if the SCS is 15kHz, a wide area of the conventional cellular bands may be supported. If the SCS is 30kHz/60kHz, a dense-urban, lower latency, and wider carrier bandwidth is supported. If the SCS is 60kHz or higher, a bandwidth greater than 24.25GHz is used in order to overcome phase noise.

An NR frequency band may be defined as a frequency range of two types (FR1, FR2). Values of the frequency range may be changed. For example, the frequency range of the two types (FR1, FR2) may be as shown below in Table 5. For convenience of explanation, among the frequency ranges that are used in an NR system, FR1 (frequency range 1) may mean a "sub 6GHz range", and FR2(frequency range 2) may mean an "above 6GHz range" and may also be referred to as a millimeter wave (mmW).

**[Table 5]**

| Frequency Range designation | Corresponding frequency range | Subcarrier Spacing (SCS) |
|---|---|---|
| FR1 | 450MHz - 6000MHz | 15, 30, 60kHz |
| FR2 | 24250MHz - 52600MHz | 60, 120, 240kHz |

As described above, the values of the frequency ranges in the NR system may be changed. For example, as shown in Table 6 below, FR1 may include a band in the range of 410MHz to 7125MHz. That is, FR1 may include a frequency band of at least 6GHz (or 5850, 5900, 5925 MHz, and so on). For example, a frequency band of at least 6GHz (or 5850, 5900, 5925 MHz, and so on) included in FR1 may include an unlicensed band. The unlicensed band may be used for diverse purposes, e.g., the unlicensed band for vehicle-specific communication (e.g., automated driving).

**[Table 6]**

| Frequency Range designation | Corresponding frequency range | Subcarrier Spacing (SCS) |
|---|---|---|
| FR1 | 410MHz - 7125MHz | 15, 30, 60kHz |
| FR2 | 24250MHz - 52600MHz | 60, 120, 240kHz |

Claims disclosed in the present specification can be combined in various ways. For example, technical features in method claims of the present specification can be combined to be implemented or performed in an apparatus, and technical features in apparatus claims of the present specification can be combined to be implemented or performed in a method. Further, technical features in method claims and apparatus claims of the present specification can be combined to be implemented or performed in an apparatus. Further, technical features in method claims and apparatus claims of the present specification can be combined to be implemented or performed in a method.

## Claims

1. A method, comprising:
receiving, by a user equipment (UE), downlink data from a network in a first slot; and
determining, by the UE, a second slot for transmitting hybrid automatic repeat request-acknowledgement (HARQ-ACK) information for the downlink data to the network,
wherein, based on the second slot being a full duplex (FD) slot composed of FD resources, the UE transmits the HARQ-ACK information in a third slot which is a half duplex (HD) slot composed of HD resources and located after the FD slot.

2. The method of claim 1, wherein the HD slot is one of a downlink slot, a flexible slot, or an uplink slot, and the third slot is the uplink slot.

3. The method of claim 1, wherein, based on the second slot being an HD slot,
based on the HD slot being a downlink slot, the UE transmits the HARQ-ACK information in the third slot, and based on the HD slot being an uplink slot, the UE transmits the HARQ-ACK information in the second slot.

4. The method of claim 1, wherein, based on the first slot being slot n and the second slot being slot n+k, a value of k is specified by a specific field of downlink control information (DCI) scheduling a physical downlink shared channel (PDSCH) for which reception ends in slot n.

5. The method of claim 1, wherein, based on the first slot being slot n and the second slot being slot n+k, a value of k is provided by a higher layer parameter

6. The method of claim 1, comprising:
receiving information informing a maximum value of a gap between the second slot and the third slot.

7. The method of claim 6, wherein the maximum value of the gap is related with the number of HD slots after the second slot.

8. The method of claim 1, comprising:
determining, by the UE, a fourth slot for transmitting uplink control information (UCI),
wherein, based on the fourth slot being an FD (full duplex) slot composed of FD resources, the UE transmits the UCI in a fifth slot which is an HD (half duplex) slot composed of HD resources and located after the FD slot.

9. The method of claim 8, wherein a maximum value of a gap between the fourth slot and the fifth slot is differently applied according to a type of the UCI.

10. The method of claim 1, comprising: receiving information informing a maximum value of a gap between the first slot and the third slot.

11. A user equipment (UE), comprising:
at least one transceiver;
at least one memory; and
at least one processor operably coupled to the at least one memory and the at least one transceiver,
wherein the at least one memory includes instructions executed by the at least one processor to perform operations,
wherein the operations comprise:
receiving downlink data from a network in a first slot; and
determining a second slot for transmitting hybrid automatic repeat request-acknowledgement (HARQ-ACK) information for the downlink data to the network,
wherein, based on the second slot being a full duplex (FD) slot composed of FD resources, the UE transmits the HARQ-ACK information in a third slot which is a half duplex (HD) slot composed of HD resources and located after the FD slot.

12. The UE of claim 11, wherein the HD slot is one of a downlink slot, a flexible slot, or an uplink slot, and the third slot is the uplink slot.

13. The UE of claim 11, wherein, based on the second slot being an HD slot,
based on the HD slot being a downlink slot, the UE transmits the HARQ-ACK information in the third slot, and
based on the HD slot being an uplink slot, the UE transmits the HARQ-ACK information in the second slot.

14. The UE of claim 11, wherein, based on the first slot being slot n and the second slot being slot n+k, a value of k is specified by a specific field of downlink control information (DCI) scheduling a physical downlink shared channel (PDSCH) for which reception ends in slot n.

15. The UE of claim 11, wherein, based on the first slot being slot n and the second slot being slot n+k, a value of k is provided by a higher layer parameter.

16. The UE of claim 11, wherein the operations comprise: receiving information informing a maximum value of a gap between the second slot and the third slot.

17. The UE of claim 16, wherein the maximum value of the gap is related with the number of HD slots after the second slot.

18. The UE of claim 11, wherein the operations comprise: determining a fourth slot for transmitting uplink control information (UCI), wherein, based on the fourth slot being an FD (full duplex) slot composed of FD resources, the UE transmits the UCI in a fifth slot which is an HD (half duplex) slot composed of HD resources and located after the FD slot.

19. The UE of claim 18, wherein a maximum value of a gap between the fourth slot and the fifth slot is differently applied according to a type of the UCI.

20. An apparatus, comprising:
at least one memory; and
at least one processor operably coupled to the at least one memory,
wherein the at least one memory includes instructions executed by the at least one processor to perform operations comprising:
receiving downlink data from a network in a first slot; and
determining a second slot for transmitting hybrid automatic repeat request-acknowledgement (HARQ-ACK) information for the downlink data to the network,
wherein, based on the second slot being a full duplex (FD) slot composed of FD resources, the UE transmits the HARQ-ACK information in a third slot which is a half duplex (HD) slot composed of HD resources and located after the FD slot.

21. At least one computer readable medium (CRM) including instructions based on being executed by at least one processor, the at least one computer readable medium comprising instructions for:
receiving downlink data from a network in a first slot; and
determining a second slot for transmitting hybrid automatic repeat request-acknowledgement (HARQ-ACK) information for the downlink data to the network,
wherein, based on the second slot being a full duplex (FD) slot composed of FD resources, the UE transmits the HARQ-ACK information in a third slot which is a half duplex (HD) slot composed of HD resources and located after the FD slot

22. A method, comprising:
transmitting, by a base station, downlink data to a user equipment (UE) in a first slot; and
determining, by the base station, a second slot for receiving hybrid automatic repeat request-acknowledgement (HARQ-ACK) information for the downlink data from the UE,
wherein, based on the second slot being a full duplex (FD) slot composed of FD resources, the base station receives the HARQ-ACK information in a third slot which is a half duplex (HD) slot composed of HD resources and located after the FD slot.

23. A base station, comprising:
at least one transceiver;
at least one memory; and
at least one processor operably coupled to the at least one memory and the at least one transceiver,
wherein the at least one memory includes instructions executed by the at least one processor to perform operations comprising:
transmitting downlink data to a user equipment (UE) in a first slot; and
determining a second slot for receiving hybrid automatic repeat request-acknowledgement (HARQ-ACK) information for the downlink data from the UE,
wherein, based on the second slot being a full duplex (FD) slot composed of FD resources, the base station receives the HARQ-ACK information in a third slot which is a half duplex (HD) slot composed of HD resources and located after the FD slot.
